# EUROPÄISCHE PATENTANMELDUNG

(11) **EP 4 807 212 A1**
(43) Veröffentlichungstag der Anmeldung: **16.09.2026**
(21) Anmeldenummer: 25162486.2
(22) Anmeldetag: 10.03.2025
(51) Int. Cl.: F16H 3/00, F16H 37/04

(54) **ANTRIEBSVORRICHTUNG, GETRIEBEGEHÄUSEANORDNUNG UND ARBEITSMASCHINE**

(71) Anmelder: Deere & Company, Moline, IL 61265 (US)
(72) Erfinder: MANN, Manuel, 68163 Mannheim (DE)
(74) Vertreter: Stein, Stefan

(57) **Zusammenfassung**

Die Erfindung betrifft eine Antriebsvorrichtung (20) für eine Arbeitsmaschine (10) oder eine Getriebegehäuseanordnung (900). Die Antriebsvorrichtung (20) umfasst einen Antrieb (52), einen Abtrieb (54) und eine erste Übersetzungseinheit (56), die insbesondere als Doppelkupplungsgetriebe ausgebildet ist, wobei mit der ersten Übersetzungseinheit (56) wenigstens eine Windungsgangstufe ausbildbar ist. Die Antriebsvorrichtung (20) umfasst eine zweite Übersetzungseinheit (58), wobei die zweite Übersetzungseinheit (58) eine erste Stirnradstufe (174, 200) und/oder eine zweite Stirnradstufe (202) und/oder ein erstes Planetengetriebe (172) und ein drittes und viertes Schaltelement (160, 162) umfasst. Die erste Übersetzungseinheit (56) ist mit der zweiten Übersetzungseinheit (58) verbindbar und die zweite Übersetzungseinheit (58) ist mit dem Abtrieb (54) verbindbar. Die Erfindung betrifft weiter eine Arbeitsmaschine (10) und eine Getriebegehäuseanordnung (900).

## Beschreibung

Die Erfindung betrifft eine Antriebsvorrichtung gemäss dem Oberbegriff des unabhängigen Anspruchs 1, eine Getriebegehäuseanordnung gemäss dem Oberbegriff des unabhängigen Anspruchs 11 und eine Arbeitsmaschine gemäss dem Oberbegriff des unabhängigen Anspruchs 14.

Seit langem kommen in Arbeitsmaschinen, insbesondere landwirtschaftlichen Zugfahrzeugen Antriebsvorrichtungen zum Einsatz, um den Vortrieb der Arbeitsmaschine auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können. Die Antriebsvorrichtung kann dabei insbesondere ein unter Last schaltbarer Getriebe sein. Eine bekannte Maßnahme ist es, die Anzahl Gangstufen einer Antriebsvorrichtung zu erhöhen, indem diese eine Kombination von Getrieben umfasst. Die DE 10 2013 110 709 A1 offenbart eine solche Antriebsvorrichtung. Die dabei verwendeten Getriebe wiederum können aus der WO 2009/050078 A2 als Doppelkupplungsgetriebe bekannt sein. Aus der DE 10 2013 110 709 A1 ist weiter bekannt, dass sich mit einer solchen Antriebsvorrichtung die Anzahl der verfügbaren Übersetzungen erhöhen lässt. Nachteilig an den bekannten Antriebsvorrichtungen ist, dass diese zu hohe Anfahrgeschwindigkeiten und zu viele Radsätze aufweisen. Darüber hinaus ist der benötigte Einbauraum zu gross. Ebenso fehlt eine Modularität der Antriebsvorrichtung, welche eine Anpassung der Antriebsvorrichtung auf die jeweilige Arbeitsmaschine ermöglicht.

Ausgehend von diesem Stand der Technik ist es eine Aufgabe der vorliegenden Erfindung eine gegenüber dem Stand der Technik verbesserte Antriebsvorrichtung, Getriebegehäuseanordnung und Arbeitsmaschine vorzuschlagen. Im Speziellen kann es eine Aufgabe der vorliegenden Erfindung sein, eine Antriebsvorrichtung und/oder eine Getriebegehäuseanordnung und/oder eine Arbeitsmaschine vorzuschlagen, die konstruktiv einfacher und/oder kompakter und/oder modular ausgestaltet sind.

Diese Aufgabe wird durch eine Antriebsvorrichtung mit den Merkmalen des Anspruchs 1 und einer Getriebegehäuseanordnung mit den Merkmalen des Anspruchs 11 und eine Arbeitsmaschine mit den Merkmalen des Anspruchs 14 gelöst. Die abhängigen Ansprüche beziehen sich auf besonders vorteilhafte Ausführungsformen der Erfindung.

Erfindungsgemäss wird eine Antriebsvorrichtung für eine Arbeitsmaschine oder eine Getriebegehäuseanordnung vorgeschlagen. Die Antriebsvorrichtung umfasst einen Antrieb, insbesondere eine Antriebswelle, und einen Abtrieb, insbesondere eine Abtriebswelle, und eine erste Übersetzungseinheit mit einem ersten Schaltelement, insbesondere einer ersten Kupplung, und einem zweiten Schaltelement, insbesondere einer zweiten Kupplung. Die Eingangsseite(n) des ersten und/oder zweiten Schaltelements, bevorzugt die Eingangsseite des ersten und zweiten Schaltelements, besonders bevorzugt die Eingangsseite der ersten und zweiten Kupplung, ist mit dem Antrieb, insbesondere der Antriebswelle, verbunden. Das erste Schaltelement, insbesondere die erste Kupplung, ist mit einer ersten Eingangswelle der ersten Übersetzungseinheit und das zweite Schaltelement, insbesondere die zweite Kupplung, ist mit einer zweiten Eingangswelle der ersten Übersetzungseinheit verbindbar oder verbunden. Im Speziellen kann der Antrieb, insbesondere die Antriebswelle, über das oder durch das erste Schaltelement mit der ersten Eingangswelle und/oder über das oder durch das zweite Schaltelement mit der zweiten Eingangswelle verbindbar oder verbunden sein. Die erste und/oder zweite Eingangswelle sind über eine Mehrzahl von Radsätzen der ersten Übersetzungseinheit mit einer ersten Ausgangswelle der ersten Übersetzungseinheit verbindbar oder verbunden. Mit anderen Worten, die erste Übersetzungseinheit kann einen oder mehrere Radsätze, insbesondere eine Mehrzahl an Radsätzen, umfassen. Die erste und/oder zweite Eingangswelle können über einen oder mehrere oder durch einen oder mehrere der Radsätze mit einer ersten Ausgangswelle der ersten Übersetzungseinheit verbindbar oder verbunden sein, insbesondere zur Einrichtung von Gangstufen. Mit der ersten Übersetzungseinheit ist wenigstens eine Windungsgangstufe ausbildbar. Die Antriebsvorrichtung umfasst ausserdem eine zweite Übersetzungseinheit. Die zweite Übersetzungseinheit umfasst eine erste Stirnradstufe und/oder eine zweite Stirnradstufe und/oder ein erstes Planetengetriebe und ein drittes und viertes Schaltelement. Die erste Übersetzungseinheit ist, insbesondere über die erste oder durch die erste oder mit der ersten Ausgangswelle, mit der zweiten Übersetzungseinheit verbindbar oder verbunden. Die zweite Übersetzungseinheit ist mit dem Abtrieb verbindbar oder verbunden.

Unter verbunden kann bevorzugt mechanisch verbunden und/oder mechanisch wirkverbunden verstanden werden. Im Speziellen kann unter verbunden zusätzlich oder alternativ antreibbar verbunden, also drehmoment- und/oder drehzahlübertragend verbunden, und/oder gekoppelt, also insbesondere mechanisch gekoppelt und/oder starr gekoppelt, und/oder drehfest gekoppelt verstanden werden. Unter verbindbar kann bevorzugt mechanisch verbindbar und/oder mechanisch wirkverbindbar verstanden werden. Im Speziellen kann unter verbindbar zusätzlich oder alternativ antreibbar verbindbar, also drehmoment- und/oder drehzahlübertragend verbindbar, und/oder koppelbar, also mechanisch koppelbar und/oder starr koppelbar, und/oder drehfest verbindbar verstanden werden. Unter verbunden kann im Speziellen also eine Verbindung von zwei Komponenten verstanden werden, die es ermöglicht, eine Energie und/oder Kraft und/oder ein Drehmoment und/oder eine Drehzahl von der einen Komponente auf die andere Komponente zu übertragen, insbesondere auf mechanischem Weg zu übertragen. Zwischen den zwei Komponenten können dabei weitere Komponenten oder Bauteile vorgesehen sein, die solch eine Energie- und/oder Kraft- und/oder Drehmomentübertragung und/oder Übertragung einer Drehzahl zwischen den zwei Komponenten ermöglichen.

Unter einem Schaltelement, insbesondere das erste und/oder zweite und/oder dritte und/oder vierte und/oder einem fünften und/oder sechsten und/oder siebten und/oder achten und/oder neunten Schaltelement, kann ein Verbindungsteil verstanden werden, mittels dem wenigstens ein eine Energie und/oder Kraft und/oder ein Drehmoment und/oder eine Drehzahl übertragendes Teil mit einem weiteren eine Energie und/oder Kraft und/oder ein Drehmoment und/oder eine Drehzahl übertragenden Teil oder mit einem orts- oder gehäusefesten Teil antriebswirksam verbindbar ist. Das jeweilige Schaltelement ist zwischen zumindest einen geöffneten und einen geschlossenen Zustand schaltbar, wobei das Schaltelement im geöffneten Zustand weder eine Energie und/oder Kraft und/oder ein Drehmoment und/oder eine Drehzahl zwischen zwei mit dem Schaltelement zusammenwirkenden Teilen übertragen kann, und wobei das Schaltelement im geschlossenen Zustand eine Energie und/oder Kraft und/oder ein Drehmoment und/oder eine Drehzahl zwischen den zwei mit dem Schaltelement zusammenwirkenden Teilen übertragen kann. Sofern eine Verbindung, insbesondere eine Wirkverbindung, zwischen zwei Elementen oder Komponenten der Antriebsvorrichtung besteht, werden Energie und/oder Kraft und/oder ein Drehmoment und/oder eine Drehzahl von einem Element oder einer Komponente auf das andere Element oder die andere Komponente übertragen. Ein Schaltelement, insbesondere das erste und/oder zweite und/oder dritte und/oder vierte und/oder fünfte und/oder sechste und/oder siebte und/oder achte und/oder neunte Schaltelement, kann eine Kupplung, insbesondere eine Lamellenkupplung, und/oder eine Bremse und/oder eine Synchronisierung und/oder eine Klauenkupplung sein. Im Speziellen können das erste und/oder zweite und/oder dritte und/oder vierte und/oder fünfte und/oder sechste und/oder siebte und/oder achte und/oder neunte Schaltelement als lastschaltbare Kupplungen, bevorzugt als Lamellenkupplungen (oder als trockene Einscheibenkupplungen), besonders bevorzugt als Reibkupplungen ausgebildet sein. Das erste und/oder zweite und/oder dritte und/oder vierte und/oder fünfte und/oder sechste und/oder siebte und/oder achte und/oder neunte Schaltelement können aber auch als nicht-lastschaltbare Kupplungen ausgebildet sein.

Im Speziellen kann die erste Übersetzungseinheit mit der ersten oder durch die erste oder über die erste Ausgangswelle mit der zweiten Übersetzungseinheit verbindbar oder verbunden sein. Im Speziellen kann die erste Ausgangswelle mit der zweiten oder durch die zweite oder über die zweite Übersetzungseinheit mit dem Abtrieb, insbesondere der Abtriebswelle, verbindbar oder verbunden sein. Die zweite Übersetzungseinheit kann eingangsseitig mit der ersten Ausgangswelle verbindbar oder verbunden sein. Die zweite Übersetzungseinheit kann ausgangsseitig mit dem Abtrieb, insbesondere der Abtriebswelle, verbindbar oder verbunden sein. Insgesamt kann die erste Übersetzungseinheit über die zweiten Übersetzungseinheit mit dem Abtrieb, insbesondere der Abtriebswelle, verbindbar oder verbunden sein. Im Speziellen kann das dritte Schaltelement mit der ersten Ausgangswelle verbindbar oder verbunden sein und/oder das vierte Schaltelement kann mit der ersten Ausgangswelle verbindbar verbunden sein. Über die erste Ausgangswelle kann eine Kraft und/oder ein Drehmoment und/oder eine Drehzahl in die zweite Übersetzungseinheit und/oder den Abtrieb, insbesondere die Abtriebswelle, einleitbar oder an diese oder diesen übertragbar sein.

Die Antriebsvorrichtung, oder insbesondere die Arbeitsmaschine, kann einen Fahrantrieb, insbesondere einen Vorderachsantrieb und/oder einen Hinterachsantrieb umfassen. Der Abtrieb kann mit einem Fahrantrieb, insbesondere dem Vorderachsantrieb und/oder dem Hinterachsantrieb, verbunden sein. Der Fahrantrieb kann eine erste Fahrzeugachse oder Vorderachse und/oder eine zweite Fahrzeugachse oder Hinterachse und/oder ein erstes Differenzialgetriebe oder ein Vorderachsdifferenzial und/oder ein zweites Differenzialgetriebe oder ein Hinterachsdifferenzial und/oder das oder die Bodeneingriffsmittel umfassen. Der Vorderachsantrieb kann die erste Fahrzeugachse oder Vorderachse und/oder das erste Differenzialgetriebe oder das Vorderachsdifferenzial und/oder das oder die Bodeneingriffsmittel umfassen. Der Hinterachsantrieb kann die zweite Fahrzeugachse oder Hinterachse und/oder das zweite Differenzialgetriebe oder das Hinterachsdifferenzial und/oder das oder die Bodeneingriffsmittel umfassen. Das erste Differenzialgetriebe kann antriebsseitig mit dem Abtrieb und/oder einer Vorgelegewelle verbindbar oder verbunden sein. Ausserdem kann das erste Differenzialgetriebe abtriebsseitig mit der ersten Fahrzeugachse, insbesondere mit einer linken Welle und einer rechten Welle zum Antrieb von Bodeneingriffsmitteln verbindbar oder verbunden sein. Das zweite Differenzialgetriebe kann antriebsseitig mit dem Abtrieb und/oder der Vorgelegewelle verbindbar oder verbunden sein. Ausserdem kann das zweite Differenzialgetriebe abtriebsseitig mit der zweiten Fahrzeugachse, insbesondere mit einer linken Welle und einer rechten Welle zum Antrieb von Bodeneingriffsmitteln verbindbar oder verbunden sein. Im Speziellen kann ein Hinterachskegeltrieb mit dem Abtrieb, insbesondere der Abtriebswelle, verbunden sein, insbesondere drehfest verbunden. Ein Ritzel des Hinterachskegeltriebs kann als Teil des Abtriebs, insbesondere der Abtriebswelle, ausgebildet sein, bevorzugt in den Abtrieb, insbesondere die Abtriebswelle, integriert sein. Vorteilhafterweise können aufgrund der direkten Verbindung des Abtriebs, insbesondere der Abtriebswelle, mit dem Hinterachskegeltrieb teure und wartungsanfällige Verbindungselemente, beispielsweise eine Gelenkwelle, eingespart werden.

Die Antriebsvorrichtung und/oder die Arbeitsmaschine kann oder können eine Steuereinheit umfassen. Die Steuereinheit kann konfiguriert sein, eines oder mehrere Drehzahlsignale und/oder Drehmomentsignale von der Antriebsvorrichtung, insbesondere von einem oder mehreren Drehzahl- und/oder Drehmomentsensoren der Antriebsvorrichtung, und/oder einem Motor zu empfangen. Die Steuereinheit kann konfiguriert sein, eine Drehzahl und/oder ein Drehmoment mit dem Drehzahlsignal und/oder dem Drehmomentsignal zu ermitteln. Die Steuereinheit kann konfiguriert sein, die Drehzahl und/oder das Drehmoment der Antriebsvorrichtung, insbesondere des Motors einzustellen und/oder zu verstellen, insbesondere eine vorgebbare Drehzahl und/oder ein vorgebbares Drehmoment einzustellen und/oder zu verstellen. Die Steuereinheit kann konfiguriert sein, die Drehzahl eines ersten Leistungsausgangs einzustellen und/oder zu verstellen.

Die Schaltelemente, insbesondere das erste und/oder zweite und/oder ein drittes und/oder vierte und/oder fünfte und/oder sechste und/oder siebte Schaltelement, können mit der Steuereinheit signalverbunden und/oder wirkend gekoppelt und/oder signalübertragend und/oder datenleitend verbunden sein. Im Speziellen kann jedes Schaltelement ein Ventil oder eine Ventilanordnung, insbesondere ein Steuerventil, oder einen Aktuator zum Ansteuern und/oder Einstellen und/oder Verstellen des jeweiligen zugeordneten Schaltelements umfassen. Das Ventil oder die Ventilanordnung oder der Aktuator können mit dem jeweiligen zugeordneten Schaltelement verbunden und/oder wirkend gekoppelt sein. Die Steuereinheit kann mit dem Ventil oder der Ventilanordnung oder dem Aktuator des jeweiligen zugeordneten Schaltelements signalverbunden und/oder wirkend gekoppelt und/oder signalübertragend und/oder datenleitend verbunden sein. Die Steuereinheit kann konfiguriert sein, das Schaltelement, insbesondere über das oder mit dem jeweiligen zugeordneten Ventil oder der Ventilanordnung oder dem Aktuator, anzusteuern und/oder einzustellen und/oder zu verstellen. Die Steuereinheit kann konfiguriert sein, das Schaltelement, insbesondere über das oder mit dem jeweiligen zugeordneten Ventil oder die Ventilanordnung oder den Aktuator, in die erste Position, also den geöffneten Zustand, oder die zweite Position, also den geschlossenen Zustand, einzustellen und/oder zu verstellen, insbesondere auch von der ersten in die zweite Position zu bewegen und umgekehrt.

Im Speziellen kann die Antriebsvorrichtung für die Arbeitsmaschine geeignet sein, insbesondere eine mit dem Motor und/oder hybrid und/oder elektrisch und/oder hydraulisch angetriebene Arbeitsmaschine sein. Ausserdem kann die Antriebsvorrichtung an und/oder in der Arbeitsmaschine angeordnet sein.

Die Eingangsseite oder Eingangsseiten kann oder können eine gemeinsame Eingangsseite des ersten und zweiten Schaltelements, insbesondere der ersten und zweiten Kupplung, sein. Die Eingangsseite oder Eingangsseiten kann oder können antreibbar sein. Die Eingangsseite, insbesondere die gemeinsame Eingangsseite, des ersten und zweiten Schaltelements, bevorzugt die Eingangsseite, insbesondere die gemeinsame Eingangsseite, der ersten und zweiten Kupplung, kann mit dem Antrieb, insbesondere der Antriebswelle, verbunden sein. Über die Eingangsseite, insbesondere die gemeinsame Eingangsseite, des ersten und zweiten Schaltelements, bevorzugt die Eingangsseite, insbesondere die gemeinsame Eingangsseite, der ersten und zweiten Kupplung, kann eine Kraft und/oder ein Drehmoment und/oder eine Drehzahl in die erste Übersetzungseinheit einleitbar oder an diese übertragbar sein. Das erste Schaltelement, insbesondere die erste Kupplung, kann mit der ersten Eingangswelle und das zweite Schaltelement, insbesondere die zweite Kupplung, kann mit der zweiten Eingangswelle drehfest verbunden sein. Das erste und/oder zweite Schaltelement, insbesondere die erste und/oder zweite Kupplung, und die erste und/oder zweiten Eingangswelle können achsparallel und/oder koaxial zueinander angeordnet sein. Im Speziellen kann das erste Schaltelement, insbesondere die erste Kupplung, zwischen dem geöffneten Zustand, in dem der Antrieb und/oder die Kupplungsantriebswelle von der ersten Eingangswelle antriebsmäßig gelöst ist, und einem geschlossenen Zustand beweglich und/oder schaltbar sein, in dem der Antrieb und/oder die Kupplungsantriebswelle mit der ersten Eingangswelle in Antriebsverbindung steht. Im Speziellen kann das zweite Schaltelement, insbesondere die zweite Kupplung, zwischen dem geöffneten Zustand, in dem der Antrieb und/oder die Kupplungsantriebswelle von der zweiten Eingangswelle antriebsmäßig gelöst ist, und dem geschlossenen Zustand beweglich und/oder schaltbar sein, in dem der Antrieb und/oder die Kupplungsantriebswelle mit der zweiten Eingangswelle in Antriebsverbindung steht.

Auf der ersten Ausgangswelle können Schalträder, beispielsweise Zahnräder oder Gangzahnräder, drehbar gelagert und auf der ersten und zweiten Eingangswelle können Festräder, beispielsweise Zahnräder, drehfest angeordnet sein, die insbesondere mit den Schalträdern in Eingriff stehen können. Die Antriebsvorrichtung, insbesondere die erste Übersetzungseinheit, weist eine Mehrzahl von Radsätzen, insbesondere mindestens zwei, vier, bevorzugt genau vier, oder mehrere Radsätze, zur Einrichtung von Gangstufen, insbesondere Gruppengangstufen auf. Dazu können mindestens ein erster Radsatz, insbesondere nur genau ein erster Radsatz, und mindestens ein zweiter Radsatz, insbesondere nur genau ein zweiter Radsatz, jeweils das Festrad an der ersten Eingangswelle und jeweils das Schaltrad an der ersten Ausgangswelle aufweisen. Ausserdem können mindestens ein dritter Radsatz, insbesondere nur genau ein dritter Radsatz, und ein mindestens vierter Radsatz, insbesondere nur genau ein vierter Radsatz, jeweils das Festrad an der zweiten Eingangswelle und jeweils das Schaltrad an der ersten Ausgangswelle aufweisen.

Darüber hinaus kann die erste Übersetzungseinheit eines oder mehrere Koppelelemente zum Koppeln zweier Schalträder umfassen, wobei insbesondere das oder die Koppelelemente drehbar auf der ersten Ausgangswelle gelagert sein kann bzw. nicht drehfest mit der ersten Ausgangswelle verbunden sein kann. Das Schaltrad des zweiten Radsatzes und das Schaltrad des dritten Radsatzes können dabei mit einem ersten Koppelelement derart koppelbar, bevorzugt derart selektiv koppelbar, dass über den zweiten und dritten Radsatz wenigstens eine Windungsgangstufe ausbildbar ist. Das Schaltrad des zweiten Radsatzes und das Schaltrad des dritten Radsatzes können dabei insbesondere in Verbindung mit dem ersten oder vierten Radsatz koppelbar sein, also insbesondere, wenn auch der erste oder vierte Radsatz durch weitere Koppelelemente an der ersten Ausgangswelle festgestellt oder drehfest gekoppelt sind. Mit anderen Worten, das Schaltrad des zweiten Radsatzes und das Schaltrad des dritten Radsatzes und das erste Koppelelement können derart auf der ersten Ausgangswelle angeordnet sein, und insbesondere mittels des ersten Koppelelements das Schaltrad des zweiten Radsatzes und das Schaltrad des dritten Radsatzes derart verbindbar und lösbar sein, dass zumindest eine Windungsgangstufe über das erste Koppelelement schaltbar ist. Der Leistungsfluss der Windungsgangstufe kann sich dabei über mindestens drei Radsätze mit miteinander kämmenden Festrädern und Schalträdern winden. Die höchste Gangstufe und die niedrigste Gangstufe können als Windungsgangstufe realisiert sein. Die erste Übersetzungseinheit kann bevorzugt genau nur sechs Gangstufen, besonders bevorzugt genau nur sechs lastschaltbare Gangstufen umfassen.

Abtriebsseitig kann der ersten Übersetzungseinheit die erste Ausgangswelle zugeordnet sein. Die Antriebsvorrichtung, insbesondere die erste Übersetzungseinheit, kann eingangsseitig, also als Eingangsseite, bevorzugt als gemeinsame Eingangsseite, eine Kupplungsantriebswelle umfassen. Die Eingangsseite der ersten Übersetzungseinheit kann aber auch eine erste und zweite Kupplungsantriebswelle umfassen. Die Kupplungsantriebswelle kann als eine Hohlwelle ausgebildet sein. Der Antrieb, insbesondere die Antriebswelle kann mit der Kupplungsantriebswelle oder der ersten und zweiten Kupplungsantriebswelle verbunden sein. Die erste und/oder zweite Eingangswelle können mit der ersten Ausgangswelle in Antriebsverbindung gebracht werden. Die erste und/oder zweite Eingangswelle können als Hohlwellen ausgebildet sein. Ausserdem können die erste und/oder zweite Eingangswelle zueinander koaxial und/oder ineinander, insbesondere frei drehbar ineinander, angeordnet sein. Im Speziellen kann die zweite Eingangswelle in der ersten Eingangswelle angeordnet sein, insbesondere frei drehbar angeordnet sein. Die erste Übersetzungseinheit kann eine oder mehrere Luftdruckabdichtungen umfassen, die in die erste Ausgangswelle und/oder die erste und/oder zweite Eingangswelle integriert sein können.

Die erste Übersetzungseinheit kann ausserdem das erste Koppelelement umfassen. Das erste Koppelelement kann insbesondere zum Koppeln der Schalträder des zweiten und dritten Radsatzes ausgebildet sein. Das erste Koppelelement kann dazu an der ersten Ausgangswelle zwischen dem zweiten und dritten Radsatz angeordnet sein, und insbesondere auf der ersten Ausgangswelle drehbar gelagert sein. Die zwei Schalträder können mit dem ersten Koppelelement drehfest und lösbar verbindbar sein, wobei die zwei gekoppelten Schalträder insbesondere auf der ersten Ausgangswelle drehbar und/oder lose angeordnet sein können. Dabei können die zwei drehbar gelagerten Schalträder des zweiten und dritten Radsatzes über das erste Koppelelement derart koppelbar sein, dass in Abhängigkeit von einem Schaltzustand des ersten Koppelelements zwischen den zwei Schalträdern eine drehfeste Verbindung herstellbar ist. Mit anderen Worten, die zwei Schalträder können mit dem ersten Koppelelement derart verbunden werden, dass die erste und zweite Eingangswelle in Abhängigkeit gebracht werden. Im Speziellen werden also bei einer Windungsgangstufe das Schaltrad des zweiten Radsatzes und das Schaltrad des dritten Radsatzes miteinander gekoppelt, um dadurch einen gemeinsamen Kraft- und Leistungsfluss durch die erste und zweite Eingangswelle zu realisieren.

Im Speziellen kann die erste Übersetzungseinheit genau zwei Eingangswellen, die erste und zweite Eingangswelle, genau die erste Ausgangswelle sowie genau das erste und zweite Schaltelement, umfassen. Ausserdem kann die erste Übersetzungseinheit genau vier Radsätze umfassen. Der erste Radsatz kann ein erstes Festrad umfassen, das insbesondere an oder auf der ersten Eingangswelle angeordnet ist, und das mit einem ersten Schaltrad in Eingriff stehen kann, das insbesondere an oder auf der ersten Ausgangswelle angeordnet ist. Der zweite Radsatz kann ein zweites Festrad umfassen, das insbesondere an oder auf der ersten Eingangswelle angeordnet ist, und das mit einem zweiten Schaltrad in Eingriff stehen kann, das insbesondere an oder auf der ersten Ausgangswelle angeordnet ist. Der dritte Radsatz kann ein drittes Festrad umfassen, das insbesondere an oder auf der zweiten Eingangswelle angeordnet ist, und das mit einem dritten Schaltrad in Eingriff stehen kann, das insbesondere an oder auf der ersten Ausgangswelle angeordnet ist. Der vierte Radsatz kann ein viertes Festrad umfassen, das insbesondere an oder auf der zweiten Eingangswelle angeordnet ist, und das mit einem vierten Schaltrad in Eingriff stehen kann, das insbesondere an oder auf der ersten Ausgangswelle angeordnet ist.

Falls eine Windungsgangstufe geschaltet wird, können zwei der Schalträder, also insbesondere das zweite und dritte Schaltrad, durch das erste Koppelelement drehfest miteinander verbunden und gleichzeitig der erste oder vierte Radsatz aktiviert sein, also gleichzeitig das erste Schaltrad durch ein zweites Koppelelement oder das vierte Schaltrad durch ein drittes Koppelelement mit der ersten Ausgangswelle verbunden werden. Die erste Übersetzungseinheit kann also im Speziellen sechs Gangstufen oder Gruppengangstufen umfassen, die insbesondere lastschaltbar sind. Die erste Übersetzungseinheit kann also vier Gangstufen aufweisen, die nur über einen Radsatz schaltbar sind und zwei Gangstufen, die als Windungsgangstufen schaltbar sind. Um die zwei weiteren Gangstufen, die als Windungsgangstufen realisiert werden können, zu schalten, können das zweite und dritte Schaltrad koppelbar sein und der erste oder vierte Radsatz durch das zweite oder dritte Koppelelement an der ersten Ausgangswelle festgestellt sein.

Das erste Koppelelement kann zwischen einer ersten Schaltstellung, in der das Schaltrad des zweiten Radsatzes und das Schaltrad des dritten Radsatzes gekoppelt sind, und einer zweiten Schaltstellung beweglich sein, in der das Schaltrad des zweiten Radsatzes und das Schaltrad des dritten Radsatzes voneinander gelöst sind. Die Schalträder können durch das erste und/oder zweite und/oder dritte Koppelelement mit der ersten Ausgangswelle drehfest und lösbar verbindbar sein, insbesondere jeweils eines der Schalträder mit einem der Koppelelemente mit der ersten Ausgangswelle drehfest und lösbar verbindbar sein. Die Koppelelemente können drehfest und axial verschiebbar auf der ersten Ausgangswelle gelagert und/oder mittels eines oder mehrerer Stellelemente bewegbar sein, insbesondere axial bewegbar sein. Die Koppelelemente können zwischen jeweils zwei Schalträdern angeordnet sein, wobei insbesondere die zu den Schalträdern zugehörigen Festräder auf der gleichen Eingangswelle, also der ersten oder zweiten Eingangswelle, angeordnet sind. Das erste Koppelelement kann zwischen dem zweiten und dritten Radsatz auf oder an der ersten Ausgangswelle angeordnet sein. Das zweite Koppelelement kann zwischen dem ersten und zweiten Radsatz auf oder an der ersten Ausgangswelle angeordnet sein. Das dritte Koppelelement kann zwischen dem dritten und vierten Radsatz auf oder an der ersten Ausgangswelle angeordnet sein. Das erste und/oder zweite und/oder dritte Koppelelement können in an sich bekannter Form als Klauenkupplungen oder als Stellvorrichtungen, insbesondere Schiebemuffen, und Synchronringe umfassende Schaltpakete bzw. Synchronisierungen ausgebildet sein. In jedem Fall handelt es sich bei den Koppelelementen um drehfest und axial verschieblich auf der ersten Ausgangswelle angeordnete Koppelmittel, mit denen die Schalträder zur Zuschaltung einer Übersetzung drehfest mit der ersten Ausgangswelle verbindbar sind. Die Axialverschiebung der Koppelelemente kann über das oder die Stellelemente erfolgen. Dazu kann die Antriebsvorrichtung, insbesondere die erste Übersetzungseinheit, entsprechende Stellelemente umfassen oder insbesondere jedes Koppelelement kann jeweils ein Stellelement umfassen. Die Schaltpakete bzw. Synchronisierungen können auf der ersten Ausgangswelle axial verschiebbare, aber mit der ersten Ausgangswelle drehfest verbundene Stellvorrichtungen bzw. Schiebemuffe und axial direkt benachbarte, also rechts und/oder links der Stellvorrichtung oder Schiebemuffe, angeordnete Synchronringe umfassen. Die Stellvorrichtung, Schiebemuffe oder das Stellelement können zur Betätigung der Koppelelemente manuell oder hilfskraftunterstützt betätigbar sein. Dazu kann die Antriebsvorrichtung, insbesondere die erste Übersetzungseinheit, beispielsweise einen oder mehrere Aktuatoren umfassen, sodass die Stellvorrichtung oder Stellelement hilfskraftunterstützt betätigbar sind.

Die zweite Übersetzungseinheit kann im Speziellen beispielsweise die folgenden Ausführungsformen umfassen:
- die erste Stirnradstufe und das dritte und vierte Schaltelement, insbesondere genau nur diese Komponenten (erste Ausführungsbeispiel), oder
- die erste und zweite Stirnradstufe und das dritte und vierte Schaltelement, insbesondere genau nur diese Komponenten (zweites Ausführungsbeispiel), oder
- die erste Stirnradstufe und das erste Planetengetriebe, und das dritte und vierte Schaltelement, insbesondere genau nur diese Komponenten (drittes Ausführungsbeispiel).

Im ersten Ausführungsbeispiel kann:
- das dritte Schaltelement mit der ersten Ausgangswelle verbindbar oder verbunden sein, und/oder
- das vierte Schaltelement mit der ersten Ausgangswelle verbindbar oder verbunden, und/oder
- das dritte Schaltelement mit der ersten Stirnradstufe verbindbar oder verbunden sein, und/oder
- das vierte Schaltelement mit der ersten Stirnradstufe verbindbar oder verbunden, und/oder
- die erste Ausgangswelle durch das oder über das dritte Schaltelement mit der ersten Stirnradstufe verbindbar oder verbunden sein und/oder die erste Ausgangswelle durch das oder über das vierte Schaltelement mit der ersten Stirnradstufe verbindbar oder verbunden sein, und/oder
- die erste Stirnradstufe mit dem Abtrieb, insbesondere der Abtriebswelle, verbunden sein, und/oder
- das dritte und/oder vierte Schaltelement kann über die oder mit der ersten Stirnradstufe mit dem Abtrieb, insbesondere der Abtriebswelle, verbindbar oder verbunden sein.

Im zweiten Ausführungsbeispiel kann zusätzlich oder alternativ zum ersten Ausführungsbeispiel:
- das dritte Schaltelement mit der ersten Ausgangswelle verbindbar oder verbunden sein, und/oder
- das vierte Schaltelement mit der ersten Ausgangswelle verbindbar oder verbunden, und/oder
- das dritte Schaltelement mit der ersten Stirnradstufe verbindbar oder verbunden sein, und/oder
- das vierte Schaltelement mit der zweiten Stirnradstufe verbindbar oder verbunden, und/oder
- die erste Ausgangswelle durch das oder über das dritte Schaltelement mit der ersten Stirnradstufe verbindbar oder verbunden sein und/oder die erste Ausgangswelle durch das oder über das vierte Schaltelement mit der zweiten Stirnradstufe verbindbar oder verbunden sein, und/oder
- die erste und zweite Stirnradstufe mit dem Abtrieb, insbesondere der Abtriebswelle, verbunden sein, und/oder
- das dritte Schaltelement kann über die oder mit der ersten Stirnradstufe mit dem Abtrieb, insbesondere der Abtriebswelle, verbindbar oder verbunden sein, und/oder
- das vierte Schaltelement kann über die oder mit der zweiten Stirnradstufe mit dem Abtrieb, insbesondere der Abtriebswelle, verbindbar oder verbunden sein.

Im dritten Ausführungsbeispiel kann zusätzlich oder alternativ zum ersten und/oder zweiten Ausführungsbeispiel:
- das dritte Schaltelement mit der ersten Ausgangswelle verbindbar oder verbunden sein, und/oder
- das vierte Schaltelement, das insbesondere als Bremse ausgebildet sein kann, mit dem ersten Planetengetriebe, bevorzugt einer Komponente des ersten Planetengetriebes, besonders bevorzugt dem ersten Hohlrad des ersten Planetengetriebes verbunden sein, und/oder
- das dritte Schaltelement mit dem ersten Planetengetriebe, bevorzugt einer Komponente des ersten Planetengetriebes, besonders bevorzugt dem ersten Planetenträger des ersten Planetengetriebes, verbindbar oder verbunden sein, und/oder
- die erste Ausgangswelle durch das dritte Schaltelement mit dem ersten Planetengetriebe, bevorzugt einer Komponente des ersten Planetengetriebes, besonders bevorzugt dem ersten Planetenträger des ersten Planetengetriebes, verbindbar sein, und/oder
- das erste Planetengetriebe, bevorzugt eine Komponente des ersten Planetengetriebes, besonders bevorzugt der erste Planetenträger des ersten Planetengetriebes, mit der ersten Stirnradstufe verbunden sein, und/oder
- die erste Ausgangswelle mit dem ersten Planetengetriebe, bevorzugt einer Komponente des ersten Planetengetriebes, besonders bevorzugt der ersten Sonne des ersten Planetengetriebes verbunden sein, und/oder
- die erste Stirnradstufe mit dem Abtrieb, insbesondere der Abtriebswelle, verbunden sein, und/oder
- das dritte und/oder vierte Schaltelement kann über die oder mit der ersten Stirnradstufe mit dem Abtrieb, insbesondere der Abtriebswelle, verbindbar oder verbunden sein, und/oder
- das erste Planetengetriebe, insbesondere der erste Planetenträger, über die oder mit der ersten Stirnradstufe mit dem Abtrieb, insbesondere der Abtriebswelle, verbindbar oder verbunden sein.

Wesentlich für die Erfindung ist, dass die Antriebsvorrichtung, insbesondere durch die Kombination der ersten und zweiten Übersetzungseinheit, vorteilhafterweise eine optimale Getriebespreizung aufweist. Darüber hinaus kann die Antriebsvorrichtung vorteilhafterweise als eine konstruktiv einfache Antriebsvorrichtung realisiert werden, die ausserdem über einen kompakten Aufbau verfügt. Ausserdem kann die Antriebsvorrichtung modular aufgebaut werden, wodurch beispielsweise die erste und/oder zweite Übersetzungseinheit auf einfache Art und Weise ausgetauscht werden können. Im Speziellen kann die Antriebsvorrichtung aufgrund der insbesondere sechs nutzbaren Gangstufen (Gruppengangstufen) mit unterschiedlichem Übersetzungsverhältnis der ersten Übersetzungseinheit in Kombination mit den Gangstufen der zweiten Übersetzungseinheit die optimale Getriebespreizung realisieren. Die erste Übersetzungseinheit kann insbesondere als ein Doppelkupplungsgetriebe mit einer oder zwei Windungsgangstufen ausgebildet sein, das vorteilhafterweise eine maximale Anzahl an Gangstufen mit einer minimalen Anzahl an Wellen und Zahnrädern realisiert. Dadurch kann von Vorteil ein minimaler Einbauraum und ein optimal konstruktiv einfacher Aufbau der Antriebsvorrichtung erreicht werden. Ausserdem ermöglicht der geringere Einbauraum, dass das Zugfahrzeug aufgrund des kürzeren Radabstands wendiger und kompakter wird und/oder der eingesparte Einbauraum für andere Funktionen/Baugruppen verwendet werden kann. Vorteilhaft ermöglicht die Antriebsvorrichtung ein Schalten unter Last, so dass die Antriebsvorrichtung insgesamt lastschaltfähig ist. Darüber hinaus wird durch die Kombination der ersten und zweiten Übersetzungseinheit eine optimale Getriebeabstufung für Arbeitsmaschinen erreicht, die für die komplette Bandbreite der Arbeitsbereiche von landwirtschaftlichen Zugfahrzeugen ideal ist. Im Gegensatz dazu werden im Automobil progressive Gangabstufungen gewünscht, deswegen ist dort eine Kombination von zwei Übersetzungseinheiten eher nachteilhaft, weil dadurch eine geometrische Abstufung quasi erzwungen wird. Neben Stufengetrieben sind bei Landmaschinen sehr häufig stufenlose Getriebe erforderlich. Diese können derartig ausgeführt sein, dass entweder über den kompletten Geschwindigkeitsbereich oder über mehrere Teilgeschwindigkeitsbereiche die Fahrzeuggeschwindigkeit unabhängig von der Antriebsgeschwindigkeit variiert werden kann. Auch bei diesen Getrieben ist es insbesondere zur Reduktion der Variatorgröße sinnvoll ein Stufengetriebe in den Antriebsstrang zu integrieren. Zudem wird bei der Ausführungsform mit Leistungsverzweigung nahezu immer eine Drehrichtungsumkehreinheit zur Änderung der Fahrtrichtung benötigt. Vorteil dieser Erfindung ist es, dass die einzelnen Übersetzungseinrichtungen derart ausgeführt sind, dass diese modular sowohl für Stufengetriebe als auch stufenlose Getriebe wiederverwendbar sind. Hierdurch wird eine Reduktion von Entwicklungszeit und Kosten sowie Produktkosten ermöglicht.

In Ausgestaltung der Erfindung umfasst die Antriebsvorrichtung, insbesondere die zweite Übersetzungseinheit, eine dritte Eingangswelle. Die erste Ausgangswelle kann mit einer ersten oder durch oder über eine erste Übersetzungsstufe mit der zweiten Übersetzungseinheit, insbesondere der dritten Eingangswelle, verbunden sein. Die erste Übersetzungsstufe kann insbesondere eine fünfte Stirnradstufe oder ein erstes Zahnradpaar oder drei oder mehr Zahnräder oder ein weiteres Planetengetriebe, bevorzugt ein drittes Planetengetriebe, oder ein sonstiges Getriebe sein.

Im ersten Ausführungsbeispiel der zweiten Übersetzungseinheit kann zusätzlich oder alternativ:
- das dritte Schaltelement mit der dritten Eingangswelle verbindbar oder verbunden sein, und/oder
- das vierte Schaltelement mit der dritten Eingangswelle verbindbar oder verbunden, und/oder
- die dritte Eingangswelle durch das oder über das dritte Schaltelement mit der ersten Stirnradstufe verbindbar oder verbunden sein und/oder die dritte Eingangswelle durch das oder über das vierte Schaltelement mit der ersten Stirnradstufe verbindbar oder verbunden sein, und/oder

Im zweiten Ausführungsbeispiel kann zusätzlich oder alternativ:
- das dritte Schaltelement mit der dritten Eingangswelle verbindbar oder verbunden sein, und/oder
- das vierte Schaltelement mit der dritten Eingangswelle verbindbar oder verbunden, und/oder
- die dritte Eingangswelle durch das oder über das dritte Schaltelement mit der ersten Stirnradstufe verbindbar oder verbunden sein und/oder die dritte Eingangswelle durch das oder über das vierte Schaltelement mit der zweiten Stirnradstufe verbindbar oder verbunden sein.

Im dritten Ausführungsbeispiel kann zusätzlich oder alternativ:
- das dritte Schaltelement mit der dritten Eingangswelle verbindbar oder verbunden sein, und/oder
- die dritte Eingangswelle durch das dritte Schaltelement mit dem ersten Planetengetriebe, bevorzugt einer Komponente des ersten Planetengetriebes, besonders bevorzugt dem ersten Planetenträger des ersten Planetengetriebes, verbindbar sein, und/oder
- die dritte Eingangswelle mit dem ersten Planetengetriebe, bevorzugt einer Komponente des ersten Planetengetriebes, besonders bevorzugt der ersten Sonne des ersten Planetengetriebes verbunden sein.

Das erste und/oder zweite Schaltelement, insbesondere die erste und/oder zweite Kupplung, und/oder das dritte und/oder vierte Schaltelement und die erste und/oder zweiten und/oder dritte Eingangswelle können achsparallel und/oder koaxial zueinander angeordnet sein. Die dritte Eingangswelle kann als Hohlwelle ausgebildet sein. Dadurch kann vorteilhafterweise eine kompakte und konstruktiv einfach ausgestaltete Anordnung der Antriebsvorrichtung realisiert werden. Dadurch kann vorteilhafterweise eine kompakte und konstruktiv einfach ausgestaltete Anordnung der Antriebsvorrichtung realisiert werden.

In Ausgestaltung der Erfindung umfasst die Antriebsvorrichtung eine dritte Übersetzungseinheit, insbesondere eine Reversiereinheit oder Lastschaltwendeeinheit. Die dritte Übersetzungseinheit kann, insbesondere eingangsseitig, mit der ersten Übersetzungseinheit verbindbar oder verbunden sein. Die dritte Übersetzungseinheit kann, insbesondere ausgangsseitig, mit der zweiten Übersetzungseinheit verbindbar oder verbunden sein. Die dritte Übersetzungseinheit kann zur Umkehr der Fahrtrichtung ausgebildet sein. Die dritte Übersetzungseinheit kann lastschaltbar oder nicht-lastschaltbar sein. Mit der dritten Übersetzungseinheit kann eine Drehrichtung der ersten Ausgangswelle umkehrbar sein. Darüber hinaus kann die dritte Übersetzungseinheit achsparallel und/oder koaxial zum ersten und/oder zweiten Schaltelement, insbesondere die erste und/oder zweite Kupplung, und/oder dritten und/oder vierten Schaltelement und zur ersten und/oder zweiten und/oder dritten Eingangswelle angeordnet sein. Im Speziellen kann die erste Übersetzungseinheit mit der ersten oder durch die erste oder über die erste Ausgangswelle mit der dritten Übersetzungseinheit verbindbar oder verbunden sein. Im Speziellen kann die erste Ausgangswelle mit der dritten oder durch die dritte oder über die dritte Übersetzungseinheit mit der dritten Eingangswelle verbindbar oder verbunden sein. Im Speziellen kann die dritte Übersetzungseinheit mit der dritten oder durch die dritte oder über die dritte Eingangswelle mit der zweiten Übersetzungseinheit verbindbar oder verbunden sein. Insgesamt kann die erste Übersetzungseinheit über oder durch die dritte Übersetzungseinheit mit der zweiten Übersetzungseinheit verbindbar oder verbunden sein. Die dritte Übersetzungseinheit kann beispielsweise eine zweite Übersetzungsstufe und ein fünftes und sechstes Schaltelement umfassen. Die dritte Übersetzungseinheit kann aber auch nur das fünfte und sechste Schaltelement umfassen. Die dritte Übersetzungseinheit kann insbesondere durch das fünfte und/oder sechste Schaltelement betätigbar sein. Das fünfte Schaltelement kann mit der ersten Ausgangswelle verbindbar oder verbunden sein. Das sechste Schaltelement kann mit der ersten Ausgangswelle verbindbar oder verbunden sein. Die erste Ausgangswelle kann durch die oder über die zweite Übersetzungsstufe mit dem sechsten Schaltelement verbindbar oder verbunden sein. Das fünfte und/oder sechste Schaltelement kann mit der dritten Eingangswelle verbindbar oder verbunden sein. Mit anderen Worten, die erste Ausgangswelle kann mit dem fünften und/oder durch das fünfte Schaltelement mit der zweiten Übersetzungseinheit, insbesondere der dritten Eingangswelle, verbindbar oder verbunden sein. Ausserdem kann die erste Ausgangswelle über die zweite Übersetzungsstufe und mit dem sechsten oder durch das sechste Schaltelement mit der zweiten Übersetzungseinheit, insbesondere der dritten Eingangswelle, verbindbar oder verbunden sein. Die zweite Übersetzungsstufe kann insbesondere vier oder mehr Zahnräder mit mindestens einem freilaufenden Zahnrad umfassen. Dadurch kann die dritte Übersetzungseinheit vorteilhafterweise als Vorvariatorstufe für zweite Übersetzungseinheit ausgebildet sein. Ebenso kann die dritte Übersetzungseinheit in Planetenbauweise ausgeführt sein. Die dritte Übersetzungseinheit kann beispielsweise ein zweites Planetengetriebe und das fünfte und sechste Schaltelement umfassen. Die dritte Übersetzungseinheit kann insbesondere durch das fünfte und sechste Schaltelement betätigbar sein. Das fünfte Schaltelement kann eingangsseitig mit der ersten Ausgangswelle verbindbar oder verbunden sein. Das fünfte Schaltelement kann ausgangsseitig dem zweiten Planetenträger des zweiten Planetengetriebes verbindbar oder verbunden sein. Das sechste Schaltelement kann insbesondere als Bremse ausgebildet sein. Das sechste Schaltelement kann dem zweiten Hohlrad des zweiten Planetengetriebes verbunden sein. Das zweite Sonnenrad des zweiten Planetengetriebes kann mit der dritten Eingangswelle verbunden sein. Durch die Planetenbauweise wird eine besonders kurze axiale Baulänge erzielt, was sich vorteilhaft auch auf die Baulänge der Schaltgetriebeanordnung insgesamt auswirkt.

In Ausgestaltung der Erfindung umfasst die Antriebsvorrichtung, insbesondere die dritte Übersetzungseinheit, eine vierte Eingangswelle. Die erste Ausgangswelle kann mit der vierten Eingangswelle über eine dritte Übersetzungsstufe verbindbar oder verbunden sein. Die dritte Übersetzungsstufe kann insbesondere eine sechste Stirnradstufe oder ein zweites Zahnradpaar oder drei oder mehr Zahnräder oder ein weiteres Planetengetriebe, bevorzugt ein viertes Planetengetriebe, oder ein sonstiges Getriebe sein. Da in dieser Ausführung auf die Verbindung der ersten mit der zweiten Übersetzungseinheit über die erste Übersetzungsstufe verzichtet werden kann, kann die dritte Übersetzungsstufe auch erste Übersetzungsstufe genannt werden. Im Speziellen kann die erste Übersetzungseinheit über die erste Ausgangswelle mit der vierten Eingangswelle verbindbar oder verbunden sein und über die vierte Eingangswelle mit der dritten Übersetzungseinheit verbindbar oder verbunden sein. Im Speziellen kann die vierte Eingangswelle mit der dritten oder durch die dritte oder über die dritte Übersetzungseinheit mit der dritten Eingangswelle verbindbar oder verbunden sein.

Umfasst die dritte Übersetzungseinheit beispielsweise die zweite Übersetzungsstufe und ein fünftes und sechstes Schaltelement und die vierte Eingangswelle, kann alternativ:
- das fünfte Schaltelement kann mit der vierten Eingangswelle verbindbar oder verbunden sein, und/oder
- das sechste Schaltelement kann mit der vierten Eingangswelle verbindbar oder verbunden sein, und/oder
- die vierte Eingangswelle kann durch die oder über die zweite Übersetzungsstufe mit dem sechsten Schaltelement verbindbar oder verbunden sein.
- Mit anderen Worten, die vierte Eingangswelle kann mit dem fünften und/oder durch das fünfte Schaltelement mit der zweiten Übersetzungseinheit, insbesondere der dritten Eingangswelle, verbindbar oder verbunden sein. Ausserdem kann die vierte Eingangswelle über die zweite Übersetzungsstufe und mit dem sechsten oder durch das sechste Schaltelement mit der zweiten Übersetzungseinheit, insbesondere der dritten Eingangswelle, verbindbar oder verbunden sein.

Wenn die dritte Übersetzungseinheit in Planetenbauweise ausgeführt ist und die vierte Eingangswelle umfasst, kann alternativ das fünfte Schaltelement eingangsseitig mit der vierten Eingangswelle verbindbar oder verbunden sein.

Die vierte Eingangswelle kann achsparallel und/oder koaxial zum ersten und/oder zweiten Schaltelement, insbesondere die erste und/oder zweite Kupplung, und/oder zum dritten und/oder vierten Schaltelement und die erste und/oder zweiten und/oder dritte Eingangswelle angeordnet sein. Die vierte Eingangswelle kann als Hohlwelle ausgebildet sein. Die dritte und/oder vierte Eingangswelle können als Hohlwellen ausgebildet sein. Ausserdem können die dritte und/oder vierte Eingangswelle zueinander koaxial und/oder ineinander, insbesondere frei drehbar ineinander, angeordnet sein. Im Speziellen kann die vierte Eingangswelle in der dritten Eingangswelle angeordnet sein, insbesondere frei drehbar angeordnet sein.

In Ausgestaltung der Erfindung umfasst die Antriebsvorrichtung eine vierte Übersetzungseinheit, insbesondere eine Anfahreinheit. Die vierte Übersetzungseinheit kann, insbesondere eingangsseitig, mit der ersten Übersetzungseinheit, insbesondere der ersten Ausgangswelle, oder der zweiten und/oder dritten Übersetzungseinheit, insbesondere der dritten Eingangswelle, verbindbar oder verbunden sein. Die vierte Übersetzungseinheit kann, insbesondere ausgangsseitig, mit einer Vorgelegewelle verbindbar oder verbunden sein.

Im Speziellen kann die erste Übersetzungseinheit mit der ersten oder durch die erste oder über die erste Ausgangswelle mit der vierten Übersetzungseinheit verbindbar oder verbunden sein. Im Speziellen kann die erste Ausgangswelle mit der vierten oder durch die vierte oder über die vierte Übersetzungseinheit mit der Vorgelegewelle und/oder dem Abtrieb verbindbar oder verbunden sein. Insgesamt kann die erste Übersetzungseinheit über die vierte Übersetzungseinheit mit der Vorgelegewelle und/oder dem Abtrieb verbindbar oder verbunden sein. Alternativ kann vierte Übersetzungseinheit, insbesondere eingangsseitig, mit der dritten Eingangswelle verbunden sein.

Die vierte Übersetzungseinheit kann beispielsweise eine dritte Stirnradstufe und eine vierte Stirnradstufe, und mindestens ein siebtes Schaltelement umfassen. Dabei kann:
- die dritte Stirnradstufe mit der ersten Übersetzungseinheit, insbesondere der ersten Ausgangswelle, oder der zweiten und/oder dritten Übersetzungseinheit, insbesondere der dritten Eingangswelle, verbunden sein, und/oder
- die dritte Stirnradstufe mit der vierten Stirnradstufe verbunden sein, insbesondere mit der vierten Stirnradstufe in Eingriff stehen oder über eine Welle verbunden sein, und/oder
- die vierte Stirnradstufe mit dem siebten Schaltelement verbunden sein, und/oder
- die vierte Stirnradstufe mit dem siebten oder durch das siebte Schaltelement mit der Vorgelegewelle verbindbar sein, und/oder
- die erste Übersetzungseinheit, insbesondere die erste Ausgangswelle, oder die dritte Eingangswelle durch oder über die dritte und vierte Stirnradstufe mit dem siebten Schaltelement verbindbar oder verbunden sein, und/oder
- die erste Übersetzungseinheit, insbesondere die erste Ausgangswelle, oder die dritte Eingangswelle durch das oder über das siebte Schaltelement mit der Vorgelegewelle verbindbar oder verbunden sein, und/oder
- die Vorgelegewelle mit dem Abtrieb, insbesondere der Abtriebswelle, verbindbar oder verbunden sein.

Über die dritte Stirnradstufe kann eine Kraft und/oder ein Drehmoment und/oder eine Drehzahl in die vierte Übersetzungseinheit einleitbar oder an diese übertragbar sein. Über das siebte Schaltelement kann eine Kraft und/oder ein Drehmoment und/oder eine Drehzahl von der vierten Übersetzungseinheit in die Vorgelegewelle und/oder den Abtrieb, insbesondere die Abtriebswelle, einleitbar oder an diese oder diesen übertragbar sein. Die vierte Übersetzungseinheit, insbesondere das siebte Schaltelement, kann mit dem Abtrieb und/oder der Vorgelegewelle verbindbar oder verbunden sein. Das siebte Schaltelement kann zur ausgangsseitigen Anbindung, insbesondere an den Abtrieb und/oder die Vorgelegewelle, ausgebildet sein.

Die Vorgelegewelle kann eine Vollwelle oder Hohlwelle sein. Die Vorgelegewelle kann achsparallel und/oder koaxial zur ersten und/oder zweiten und/oder dritten und/oder vierten Eingangswelle und/oder der Abtrieb, insbesondere die Abtriebswelle angeordnet sein. Die erste Stirnradstufe kann über ein mit der ersten Stirnradstufe kämmendes Kopplungszahnrad mit der Vorgelegewelle verbunden sein.

Ausserdem kann die Vorgelegewelle mit dem Fahrantrieb, insbesondere dem Vorderachsantrieb, verbunden sein. Die Vorgelegewelle kann mit einer vierten oder über eine vierte Übersetzungsstufe, beispielsweise eine siebte Stirnradstufe oder ein drittes Zahnradpaar oder drei oder mehr Zahnräder oder ein fünftes Planetengetriebe oder ein sonstiges Getriebe, und/oder einem weiteren Schaltelement mit einer weiteren Welle verbindbar oder verbunden sein. Die Vorgelegewelle oder die weitere Welle kann mit dem ersten Differenzialgetriebe oder dem Vorderachsdifferenzial verbunden sein. Im Speziellen kann die Vorgelegewelle oder die weitere Welle mit einer Verzahnung eines Vorderachsantriebs in Verbindung stehen. Beispielsweise kann ein Vorderachsantriebsrad mit der Vorgelegewelle oder der weiteren Welle drehfest verbunden oder wahlweise drehfest verbindbar und lösbar sein. Dadurch kann vorteilhafterweise eine kompakte und konstruktiv einfach ausgestaltete Anordnung der Antriebsvorrichtung realisiert werden.

In Ausgestaltung der Erfindung umfasst die Antriebsvorrichtung den Motor. Der Motor kann mit dem Antrieb oder der Antriebswelle, insbesondere über ein achtes oder mit einem achten Schaltelement, verbindbar oder verbunden sein. Der Motor kann als ein Verbrennungsmotor ausgebildet sein. Alternativ oder zusätzlich kann es sich bei dem Motor um einen Elektromotor handeln. Die Steuereinheit kann mit dem Motor signalverbunden und/oder wirkend gekoppelt und/oder signalübertragend und/oder datenleitend verbunden sein. Vorteilhafterweise kann die Antriebsvorrichtung, insbesondere auch die Arbeitsmaschine, dadurch modular aufgebaut sein.

In Ausgestaltung der Erfindung weist die erste und/oder zweite und/oder dritte und/oder vierte Übersetzungseinheit einen Durchgang oder mehrere Durchgänge, insbesondere einen oder mehrere zentrale Durchgänge, für den Antrieb, insbesondere die Antriebswelle, auf. Der Antrieb, insbesondere die Antriebswelle, kann zusätzlich als eine Zapfwellen-Antriebswelle (PTO-Antriebswelle) ausgebildet sein, insbesondere auch verwendbar sein. Der Antrieb, insbesondere die Antriebswelle, und die Zapfwellen-Antriebswelle können als eine Welle, insbesondere eine gemeinsame Welle, ausgebildet sein. Der Antrieb, insbesondere die Antriebswelle, kann als Vollwelle ausgeführt sein. Der Durchgang oder die Durchgänge, insbesondere der oder die zentralen Durchgänge, kann oder können als eine oder mehrere Wellendurchführungen, insbesondere eine oder mehrere zentrale Wellendurchführungen, für den Antrieb, insbesondere die Antriebswelle, ausgebildet sein.

Die erste und/oder zweite und/oder dritte und/oder vierte Übersetzungseinheit können also eine oder mehrere Wellendurchführung, insbesondere eine oder mehrere zentrale Wellendurchführung, für den Antrieb, insbesondere die Antriebswelle, aufweisen. Im Speziellen können:
- das erste und/oder zweite Schaltelement und die erste und zweite Eingangswelle, und/oder
- das dritte Schaltelement und die erste und zweite und dritte Eingangswelle, und/oder
- das fünfte und/oder sechste Schaltelement und die erste und zweite und dritte und/oder vierte Eingangswelle, und/oder
- die dritte Stirnradstufe, und/oder
- die erste und/oder zweite und/oder dritte Übersetzungsstufe, und/oder
- das achte und/oder ein neuntes Schaltelement
jeweils Durchgänge, insbesondere Wellendurchführungen, für den Antrieb, insbesondere die Antriebswelle, aufweisen. Der Antrieb, insbesondere die Antriebswelle, können sich also durch diese Komponenten erstrecken. Ausserdem kann der Antrieb, insbesondere die Antriebswelle, zur ersten und/oder zweiten und/oder dritten und/oder vierten Eingangswelle koaxial und/oder frei drehbar in diesen angeordnet sein. Auf diese Weise ist eine direkte und damit besonders energieeffiziente Übertragung des Drehmoments und/oder der Kraft und/oder der Drehzahl zum ersten Leistungsausgang der Antriebsvorrichtung oder Arbeitsmaschine möglich.

In Ausgestaltung der Erfindung ist der Motor mit dem ersten Leistungsausgang verbindbar oder verbunden, insbesondere mit dem achten oder durch das achte Schaltelement und/oder das neunte Schaltelement, mit dem ersten Leistungsausgang verbindbar oder verbunden. Der erste Leistungsausgang kann eine Zapfwelleneinheit umfassen oder als Zapfwelleneinheit ausgebildet sein. Die Zapfwelleneinheit kann ein Zapfwellengetriebe und/oder eine Zapfwelle umfassen. Der Motor kann über den Antrieb, insbesondere die Antriebswelle, mit dem achten und/oder neunten Schaltelement verbunden sein. Das achte und/oder neunte Schaltelement kann, insbesondere über den Antrieb, mit dem ersten Leistungsausgang, insbesondere dem Zapfwellengetriebe und/oder der Zapfwelle, verbunden sein. Das achte und/oder neunte Schaltelement kann den Antrieb, insbesondere die Antriebswelle, mit dem ersten Leistungsausgang, insbesondere dem Zapfwellengetriebe und/oder der Zapfwelle, verbinden. Der erste Leistungsausgang, bevorzugt die Zapfwelleneinheit, besonders bevorzugt das Zapfwellengetriebe, kann also antriebsseitig, insbesondere über oder durch das achte und/oder neunte Schaltelement, mit dem Antrieb, insbesondere der Antriebswelle, und/oder der Zapfwellen-Antriebswelle verbindbar oder verbunden sein. Ausserdem kann der erste Leistungsausgang, bevorzugt die Zapfwelleneinheit, besonders bevorzugt das Zapfwellengetriebe, abtriebsseitig mit der Zapfwelle verbindbar oder verbunden sein. Der erste Leistungsausgang ist mit dem Motor antreibbar. Dadurch kann vorteilhafterweise eine kompakte und/oder modulare und/oder konstruktiv einfache Ausgestaltung der Antriebsvorrichtung, insbesondere des ersten Leistungsausgangs, erreicht werden.

In Ausgestaltung der Erfindung sind die erste und/oder zweite und/oder dritte und/oder vierte Eingangswelle als Hohlwellen ausgebildet sind, und/oder die erste Ausgangswelle und/oder der Antrieb und/oder der Abtrieb als Vollwellen ausgebildet, und/oder die erste und/oder zweite und/oder dritte und/oder vierte Eingangswelle und/oder die erste Ausgangswelle und/oder der Antrieb und/oder der Abtrieb sind koaxial und/oder parallel zueinander angeordnet.

In Ausgestaltung der Erfindung umfasst die Antriebsvorrichtung oder die Arbeitsmaschine eine Steuereinheit. Die Steuereinheit ist oben und unten im Detail beschrieben.

Die Erfindung betrifft weiter eine Getriebegehäuseanordnung mit einer Antriebsvorrichtung, insbesondere einer Antriebsvorrichtung nach einem der Ansprüche 1 bis 10. Die Getriebegehäuseanordnung umfasst ein erstes Gehäusemodul mit der ersten Übersetzungseinheit und ein zweites Gehäusemodul mit der zweiten Übersetzungseinheit, und das erste und zweite Gehäusemodul sind entlang oder in Richtung des Antriebs, insbesondere der Antriebswelle, angeordnet. Im Speziellen können das erste und zweite Gehäusemodul entlang oder in Richtung des Antriebs, insbesondere der Antriebswelle, nacheinander und/oder direkt benachbart angeordnet sein. Die Arbeitsmaschine kann die Getriebegehäuseanordnung umfassen.

Im ersten Gehäusemodul können zusätzlich die Vorgelegewelle, insbesondere zumindest teilweise die Vorgelegewelle, und/oder die erste Übersetzungsstufe angeordnet sein. Das erste Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die erste Übersetzungseinheit, insbesondere Komponenten der ersten Übersetzungseinheit, lagerbar sein. Zusätzlich können die erste Übersetzungsstufe und/oder die Vorgelegewelle, insbesondere zumindest teilweise die Vorgelegewelle, an und/oder auf und/oder in den Lagerstellen lagerbar sein.

Im zweiten Gehäusemodul können zusätzlich die Vorgelegewelle, insbesondere zumindest teilweise die Vorgelegewelle, und/oder der Abtrieb, insbesondere die Abtriebswelle, angeordnet sein. Das zweite Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die zweite Übersetzungseinheit, insbesondere Komponenten der zweiten Übersetzungseinheit, lagerbar sein. Zusätzlich können die Vorgelegewelle, insbesondere zumindest teilweise die Vorgelegewelle, und/oder der Abtrieb, insbesondere die Abtriebswelle, an und/oder auf und/oder in den Lagerstellen lagerbar sein.

Das erste Gehäusemodul kann eine eingangsseitige Gehäusewand aufweisen. Die eingangsseitige Gehäusewand des ersten Gehäusemoduls kann jede Gehäusewand des ersten Gehäusemoduls sein, insbesondere aber die Gehäusewand, deren Wellenlagerebene(n) orthogonal zum Antrieb, insbesondere der Antriebswelle, und/oder der Kupplungsantriebswelle angeordnet sein kann.

Die eingangsseitige Gehäusewand des ersten Gehäusemoduls kann mindestens eine erste Eingangsöffnung aufweisen. Die erste Eingangsöffnung kann zum Anbinden und/oder Verbinden der ersten Übersetzungseinheit ausgebildet sein, insbesondere zum Anbinden und/oder Verbinden des ersten und/oder zweiten Schaltelements mit dem Antrieb, insbesondere der Antriebswelle, und/oder der Kupplungsantriebswelle. In der ersten Eingangsöffnung der eingangsseitigen Gehäusewand des ersten Gehäusemoduls kann der Antrieb und/oder die Kupplungsantriebswelle angeordnet sein. Im Speziellen kann sich der Antrieb, insbesondere die Antriebswelle, und/oder die Kupplungsantriebswelle durch die erste Eingangsöffnung erstrecken.

Das erste Gehäusemodul kann eine ausgangsseitige Gehäusewand aufweisen. Die ausgangsseitige Gehäusewand des ersten Gehäusemoduls kann jede Gehäusewand des ersten Gehäusemoduls sein. Die ausgangsseitige Gehäusewand des ersten Gehäusemoduls, insbesondere deren Wellenlagerebene, kann parallel zur eingangsseitigen Gehäusewand des ersten Gehäusemoduls, insbesondere deren Wellenlagerebene, und/oder orthogonal zum Antrieb, insbesondere der Antriebswelle, und/oder der Kupplungsantriebswelle angeordnet sein. Die ausgangsseitige Gehäusewand des ersten Gehäusemoduls kann eine erste Ausgangsöffnung aufweisen. Die erste Ausgangsöffnung kann zum Anbinden und/oder Verbinden der ersten Übersetzungseinheit, insbesondere der ersten Übersetzungsstufe oder der ersten Ausgangswelle, mit der zweiten Übersetzungseinheit oder der dritten Eingangswelle oder der vierten Eingangswelle ausgebildet sein. In der ersten Ausgangsöffnung kann die erste Ausgangswelle oder die dritte Eingangswelle und/oder die vierte Eingangswelle angeordnet sein. Im Speziellen kann sich die erste Ausgangswelle oder die dritte Eingangswelle und/oder die vierte Eingangswelle durch die erste Ausgangsöffnung erstrecken.

Die eingangsseitige Gehäusewand des ersten Gehäusemoduls kann eine zweite Eingangsöffnung aufweisen. Die zweite Eingangsöffnung kann zum Anbinden und/oder Verbinden der Vorgelegewelle an den Vorderachsantrieb ausgebildet sein. In der zweiten Eingangsöffnung der eingangsseitigen Gehäusewand des ersten Gehäusemoduls kann die Vorgelegewelle angeordnet sein. Im Speziellen kann sich die Vorgelegewelle durch die zweite Eingangsöffnung erstrecken.

Die ausgangsseitige Gehäusewand des ersten Gehäusemoduls kann eine zweite Ausgangsöffnung aufweisen. Die zweite Ausgangsöffnung kann zur Durchführung und/oder zum Anbinden und/oder Verbinden der Vorgelegewelle ausgebildet sein. In der zweiten Ausgangsöffnung kann die Vorgelegewelle angeordnet sein. Im Speziellen kann sich die Vorgelegewelle durch die zweite Ausgangsöffnung erstrecken.

Das zweite Gehäusemodul kann eine eingangsseitige Gehäusewand aufweisen. Die eingangsseitige Gehäusewand des zweiten Gehäusemoduls kann jede Gehäusewand des zweiten Gehäusemoduls sein. Die eingangsseitige Gehäusewand des zweiten Gehäusemoduls, insbesondere deren Wellenlagerebene, kann parallel zur eingangsseitigen Gehäusewand des ersten Gehäusemoduls, insbesondere deren Wellenlagerebene, und/oder orthogonal zum Antrieb, insbesondere der Antriebswelle, angeordnet sein.

Die eingangsseitige Gehäusewand des zweiten Gehäusemoduls kann eine dritte Eingangsöffnung aufweisen. Die dritte Eingangsöffnung kann zum Anbinden und/oder Verbinden der ersten Übersetzungseinheit, insbesondere der ersten Übersetzungsstufe oder der ersten Ausgangswelle, mit der zweiten Übersetzungseinheit oder der dritten Eingangswelle oder der vierten Eingangswelle ausgebildet sein. In der dritten Eingangsöffnung kann der Antrieb, insbesondere die Antriebswelle, und/oder die erste Ausgangswelle oder die dritte Eingangswelle und/oder die vierte Eingangswelle angeordnet sein. Im Speziellen kann sich der Antrieb, insbesondere die Antriebswelle, und/oder die erste Ausgangswelle oder die dritte Eingangswelle und/oder die vierte Eingangswelle durch die dritte Eingangsöffnung erstrecken. Die Mittellinie der ersten Ausgangsöffnung und die Mittellinie der dritten Eingangsöffnung können koaxial oder achsparallel sein.

Die eingangsseitige Gehäusewand des zweiten Gehäusemoduls kann eine vierte Eingangsöffnung aufweisen. Die vierte Eingangsöffnung kann zur Durchführung und/oder zum Anbinden und/oder Verbinden der Vorgelegewelle an den Abtrieb, insbesondere die Abtriebswelle, ausgebildet sein. In der vierten Eingangsöffnung der eingangsseitigen Gehäusewand des zweiten Gehäusemoduls kann die Vorgelegewelle angeordnet sein. Im Speziellen kann sich die Vorgelegewelle durch die vierte Eingangsöffnung erstrecken.

Die ausgangsseitige Gehäusewand des ersten Gehäusemoduls und die eingangsseitige Gehäusewand des zweiten Gehäusemoduls können alternativ als erste gemeinsame Gehäusewand des ersten und zweiten Gehäusemoduls ausgebildet sein. Die erste gemeinsame Gehäusewand kann eine erste Durchgangsöffnung aufweisen. Die erste Ausgangsöffnung und die dritte Eingangsöffnung können als die erste Durchgangöffnung ausgebildet sein. Die erste Durchgangsöffnung übernimmt in diesem Fall die Funktion der ersten Ausgangsöffnung und der dritten Eingangsöffnung. Die erste gemeinsame Gehäusewand kann eine zweite Durchgangsöffnung aufweisen. Die zweite Ausgangsöffnung und die vierte Eingangsöffnung können als die zweite Durchgangöffnung ausgebildet sein. Die zweite Durchgangsöffnung übernimmt in diesem Fall die Funktion der zweiten Ausgangsöffnung und der vierten Eingangsöffnung. In der ersten Durchgangsöffnung kann der Antrieb, insbesondere die Antriebswelle, und/oder die erste Ausgangswelle oder die dritte Eingangswelle und/oder die vierte Eingangswelle angeordnet sein. Im Speziellen können sich der Antrieb, insbesondere die Antriebswelle, und/oder die erste Ausgangswelle oder die dritte Eingangswelle und/oder die vierte Eingangswelle durch die erste Durchgangsöffnung erstrecken. In der zweiten Durchgangsöffnung kann die Vorgelegewelle angeordnet sein. Im Speziellen kann sich die Vorgelegewelle durch die zweite Durchgangsöffnung erstrecken.

Das zweite Gehäusemodul kann eine ausgangsseitige Gehäusewand aufweisen. Die ausgangsseitige Gehäusewand des zweiten Gehäusemoduls kann jede Gehäusewand des zweiten Gehäusemoduls sein. Die ausgangsseitige Gehäusewand des zweiten Gehäusemoduls insbesondere deren Wellenlagerebene, oder die zweite gemeinsame Gehäusewand insbesondere deren Wellenlagerebene, können parallel zur eingangsseitigen Gehäusewand des ersten und/oder zweiten Gehäusemoduls, insbesondere deren Wellenlagerebene, und/oder orthogonal zum Antrieb, insbesondere der Antriebswelle, angeordnet sein.

Die ausgangsseitige Gehäusewand des zweiten Gehäusemoduls kann eine dritte Ausgangsöffnung aufweisen. Die dritte Ausgangsöffnung kann zum Anbinden und/oder Verbinden der ersten und/oder zweiten Übersetzungseinheit mit der dritten Übersetzungseinheit ausgebildet sein. In der dritten Ausgangsöffnung kann der Antrieb, insbesondere die Antriebswelle, und/oder die dritte Eingangswelle und/oder die vierte Eingangswelle angeordnet sein. Im Speziellen kann sich der Antrieb, insbesondere die Antriebswelle, und/oder die dritte Eingangswelle und/oder die vierte Eingangswelle durch die dritte Ausgangsöffnung erstrecken.

Die ausgangsseitige Gehäusewand des zweiten Gehäusemoduls kann eine vierte Ausgangsöffnung aufweisen. Die vierte Ausgangsöffnung kann zur Durchführung und/oder zum Anbinden und/oder Verbinden des Abtriebs, insbesondere der Abtriebswelle, ausgebildet sein. In der vierten Ausgangsöffnung der ausgangsseitige Gehäusewand des zweiten Gehäusemoduls kann der Abtrieb, insbesondere die Abtriebswelle, angeordnet sein. Im Speziellen kann sich der Abtrieb, insbesondere die Abtriebswelle, durch die vierte Ausgangsöffnung erstrecken.

In Ausgestaltung der Erfindung umfasst die Getriebegehäuseanordnung ein drittes Gehäusemodul mit der dritten Übersetzungseinheit und das erste und zweite und dritte Gehäusemodul sind entlang des Antriebs angeordnet. Im Speziellen können das erste und zweite und dritte Gehäusemodul entlang oder in Richtung des Antriebs, insbesondere der Antriebswelle, nacheinander und/oder direkt benachbart angeordnet sein. Im Speziellen können das zweite und dritte Gehäusemodul direkt benachbart angeordnet sein.

Im dritten Gehäusemodul können das fünfte und sechste Schaltelement und die zweite Übersetzungsstufe angeordnet sein. Das dritte Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die dritte Übersetzungseinheit, insbesondere Komponenten der dritten Übersetzungseinheit, lagerbar sein.

Das dritte Gehäusemodul kann eine eingangsseitige Gehäusewand aufweisen. Die eingangsseitige Gehäusewand des dritten Gehäusemoduls kann jede Gehäusewand des dritten Gehäusemoduls sein. Die eingangsseitige Gehäusewand des dritten Gehäusemoduls insbesondere deren Wellenlagerebene, kann parallel zur eingangsseitigen Gehäusewand des ersten und/oder zweiten Gehäusemoduls, insbesondere deren Wellenlagerebene, und/oder orthogonal zum Antrieb, insbesondere der Antriebswelle, angeordnet sein.

Die eingangsseitige Gehäusewand des dritten Gehäusemoduls kann eine fünfte Eingangsöffnung aufweisen. Die fünfte Eingangsöffnung kann zum Anbinden und/oder Verbinden der dritten Übersetzungseinheit mit der ersten und/oder zweiten Übersetzungseinheit, insbesondere der dritten Eingangswelle und/oder der vierten Eingangswelle ausgebildet sein. In der fünften Eingangsöffnung kann der Antrieb, insbesondere die Antriebswelle, und/oder die dritte und/oder vierte Eingangswelle angeordnet sein. Im Speziellen können sich der Antrieb, insbesondere die Antriebswelle, und/oder die dritte und/oder vierte Eingangswelle durch die fünfte Eingangsöffnung erstrecken.

Die ausgangsseitige Gehäusewand des zweiten Gehäusemoduls und die eingangsseitige Gehäusewand des dritten Gehäusemoduls können alternativ als zweite gemeinsame Gehäusewand des zweiten und dritten Gehäusemoduls ausgebildet sein. Die zweite gemeinsame Gehäusewand kann eine dritte Durchgangsöffnung aufweisen. Die dritte Ausgangsöffnung und die fünfte Eingangsöffnung können als die dritte Durchgangöffnung ausgebildet sein. Die dritte Durchgangsöffnung übernimmt in diesem Fall die Funktion der dritten Ausgangsöffnung und der fünften Eingangsöffnung. In der dritten Durchgangsöffnung können der Antrieb, insbesondere die Antriebswelle, und/oder die dritte Eingangswelle und/oder die vierte Eingangswelle angeordnet sein. Im Speziellen können sich der Antrieb, insbesondere die Antriebswelle, und/oder die dritte Eingangswelle und/oder die vierte Eingangswelle durch die dritte Durchgangsöffnung erstrecken.

Alternativ kann die zweite gemeinsame Gehäusewand die vierte Ausgangsöffnung aufweisen. Die vierte Ausgangsöffnung kann zur Durchführung und/oder zum Anbinden und/oder Verbinden des Abtriebs, insbesondere der Abtriebswelle, ausgebildet sein. In der vierten Ausgangsöffnung der kann der Abtrieb, insbesondere die Abtriebswelle, angeordnet sein. Im Speziellen kann sich der Abtrieb, insbesondere die Abtriebswelle, durch die vierte Ausgangsöffnung erstrecken.

In Ausgestaltung der Erfindung, umfasst die Getriebegehäuseanordnung ein viertes Gehäusemodul mit der vierten Übersetzungseinheit, und das erste und zweite und dritte und vierte Gehäusemodul sind entlang des Antriebs angeordnet. Im Speziellen können die Gehäusemodule in der Reihenfolge erstes und viertes und zweites und drittes Gehäusemodul entlang oder in Richtung des Antriebs, insbesondere der Antriebswelle, nacheinander und/oder direkt benachbart angeordnet sein. Im Speziellen können das erste und vierte und das vierte und zweite und das zweite und dritte Gehäusemodul direkt benachbart angeordnet sein.

Im vierten Gehäusemodul können zusätzlich die Vorgelegewelle angeordnet sein. Das vierte Gehäusemodul kann innen liegende Lagerstellen, beispielsweise in Form von Stegen oder anderen Lager- und/oder Befestigungseinrichtungen aufweisen. An und/oder auf und/oder in den Lagerstellen kann die vierte Übersetzungseinheit, insbesondere Komponenten der dritten Übersetzungseinheit, und/oder die Vorgelegewelle lagerbar sein.

Das vierte Gehäusemodul kann eine eingangsseitige Gehäusewand aufweisen. Die eingangsseitige Gehäusewand des vierten Gehäusemoduls kann jede Gehäusewand des vierten Gehäusemoduls sein. Die eingangsseitige Gehäusewand des vierten Gehäusemoduls, insbesondere deren Wellenlagerebene, kann parallel zur eingangsseitigen Gehäusewand des ersten und/oder zweiten und/oder dritten Gehäusemoduls, insbesondere deren Wellenlagerebene, und/oder orthogonal zum Antrieb, insbesondere der Antriebswelle, angeordnet sein.

Die eingangsseitige Gehäusewand des vierten Gehäusemoduls kann eine sechste Eingangsöffnung aufweisen. Die sechste Eingangsöffnung kann zur Durchführung des Antriebs, insbesondere die Antriebswelle, und/oder der dritten Eingangswelle und/oder der vierten Eingangswelle und/oder zum Anbinden und/oder Verbinden der vierten Übersetzungseinheit mit der ersten Übersetzungseinheit ausgebildet sein. In der sechsten Eingangsöffnung kann der Antrieb, insbesondere die Antriebswelle, und/oder die dritte Eingangswelle und/oder die vierte Eingangswelle angeordnet sein. Im Speziellen können sich der Antrieb, insbesondere die Antriebswelle, und/oder die dritte Eingangswelle und/oder die vierte Eingangswelle durch die sechste Eingangsöffnung erstrecken. Die Mittellinie der ersten Ausgangsöffnung und die Mittellinie der dritten Eingangsöffnung können koaxial oder achsparallel sein. Die eingangsseitige Gehäusewand des vierten Gehäusemoduls kann eine siebte Eingangsöffnung aufweisen. Die siebte Eingangsöffnung kann zur Durchführung der Vorgelegewelle und/oder zum Anbinden und/oder Verbinden der Vorgelegewelle an den Abtrieb, insbesondere die Abtriebswelle, ausgebildet sein. In der siebten Eingangsöffnung der eingangsseitigen Gehäusewand des vierten Gehäusemoduls kann die Vorgelegewelle angeordnet sein. Im Speziellen kann sich die Vorgelegewelle durch die siebte Eingangsöffnung erstrecken.

Das vierte Gehäusemodul kann eine ausgangsseitige Gehäusewand aufweisen. Die ausgangsseitige Gehäusewand des vierten Gehäusemoduls kann jede Gehäusewand des zweiten Gehäusemoduls sein. Die ausgangsseitige Gehäusewand des zweiten Gehäusemoduls, insbesondere deren Wellenlagerebene, kann parallel zur eingangsseitigen Gehäusewand des ersten und/oder zweiten und/oder dritten Gehäusemoduls, insbesondere deren Wellenlagerebene, und/oder orthogonal zum Antrieb, insbesondere der Antriebswelle, angeordnet sein.

Die ausgangsseitige Gehäusewand des vierten Gehäusemoduls kann eine fünfte Ausgangsöffnung aufweisen. Die fünfte Ausgangsöffnung kann zur Durchführung des Antriebs, insbesondere die Antriebswelle, und/oder der dritten Eingangswelle und/oder der vierten Eingangswelle und/oder zum Anbinden und/oder Verbinden der vierten Übersetzungseinheit mit der ersten und/oder zweiten und/oder dritten Übersetzungseinheit ausgebildet sein. In der fünften Ausgangsöffnung kann der Antrieb, insbesondere die Antriebswelle, und/oder die dritte Eingangswelle und/oder die vierte Eingangswelle angeordnet sein. Im Speziellen kann sich der Antrieb, insbesondere die Antriebswelle, und/oder die dritte Eingangswelle und/oder die vierte Eingangswelle durch die fünfte Ausgangsöffnung erstrecken.

Die ausgangsseitige Gehäusewand des vierten Gehäusemoduls kann eine sechste Ausgangsöffnung aufweisen. Die sechste Ausgangsöffnung kann zur Durchführung und/oder zum Anbinden und/oder Verbinden der Vorgelegewelle und/oder des Abtriebs, insbesondere der Abtriebswelle, ausgebildet sein. In der sechsten Ausgangsöffnung der ausgangsseitige Gehäusewand des vierten Gehäusemoduls kann die Vorgelegewelle und/oder der Abtrieb, insbesondere die Abtriebswelle, angeordnet sein. Im Speziellen kann sich die Vorgelegewelle und/oder der Abtrieb, insbesondere die Abtriebswelle, durch die sechste Ausgangsöffnung erstrecken.

In dieser Ausführungsform, als wenn die Getriebegehäuseanordnung das erste, zweite, dritte und vierte Gehäusemodul umfasst, können die gemeinsamen Gehäusewände wie folgt anders ausgebildet und angeordnet sein.

Die ausgangsseitige Gehäusewand des ersten Gehäusemoduls und die eingangsseitige Gehäusewand des vierten Gehäusemoduls können alternativ als erste gemeinsame Gehäusewand des ersten und vierten Gehäusemoduls ausgebildet sein. Die erste gemeinsame Gehäusewand kann eine erste Durchgangsöffnung aufweisen. Die erste Ausgangsöffnung und die sechste Eingangsöffnung können als die erste Durchgangöffnung ausgebildet sein. Die erste Durchgangsöffnung übernimmt in diesem Fall die Funktion der ersten Ausgangsöffnung und der sechsten Eingangsöffnung. Die erste gemeinsame Gehäusewand kann eine zweite Durchgangsöffnung aufweisen. Die zweite Ausgangsöffnung und die siebte Eingangsöffnung können als die zweite Durchgangsöffnung ausgebildet sein. Die zweite Durchgangsöffnung übernimmt in diesem Fall die Funktion der zweiten Ausgangsöffnung und der siebten Eingangsöffnung. In der ersten Durchgangsöffnung kann der Antrieb, insbesondere die Antriebswelle, und/oder die erste Ausgangswelle oder die dritte Eingangswelle und/oder die vierte Eingangswelle angeordnet sein. Im Speziellen können sich der Antrieb, insbesondere die Antriebswelle, und/oder die erste Ausgangswelle oder die dritte Eingangswelle und/oder die vierte Eingangswelle durch die erste Durchgangsöffnung erstrecken. In der zweiten Durchgangsöffnung kann die Vorgelegewelle angeordnet sein. Im Speziellen kann sich die Vorgelegewelle durch die zweite Durchgangsöffnung erstrecken.

Die ausgangsseitige Gehäusewand des vierten Gehäusemoduls und die eingangsseitige Gehäusewand des zweiten Gehäusemoduls können alternativ als zweite gemeinsame Gehäusewand des zweiten und vierten Gehäusemoduls ausgebildet sein. Die zweite gemeinsame Gehäusewand kann eine dritte Durchgangsöffnung aufweisen. Die fünfte Ausgangsöffnung und die dritte Eingangsöffnung können als die dritte Durchgangöffnung ausgebildet sein. Die dritte Durchgangsöffnung übernimmt in diesem Fall die Funktion der fünften Ausgangsöffnung und der dritten Eingangsöffnung. Die zweite gemeinsame Gehäusewand kann eine vierte Durchgangsöffnung aufweisen. Die sechste Ausgangsöffnung und die vierte Eingangsöffnung können als die vierte Durchgangsöffnung ausgebildet sein. Die vierte Durchgangsöffnung übernimmt in diesem Fall die Funktion der sechsten Ausgangsöffnung und der vierten Eingangsöffnung. In der dritten Durchgangsöffnung kann sich der Antrieb, insbesondere die Antriebswelle und/oder die dritte Eingangswelle und/oder die vierte Eingangswelle angeordnet sein. Im Speziellen können sich die dritte Eingangswelle und/oder die vierte Eingangswelle durch die dritte Durchgangsöffnung erstrecken. In der vierten Durchgangsöffnung kann die Vorgelegewelle angeordnet sein. Im Speziellen kann sich die Vorgelegewelle durch die vierte Durchgangsöffnung erstrecken.

Die ausgangsseitige Gehäusewand des zweiten Gehäusemoduls und die eingangsseitige Gehäusewand des dritten Gehäusemoduls können alternativ als dritte gemeinsame Gehäusewand des zweiten und dritten Gehäusemoduls ausgebildet sein. Die dritte gemeinsame Gehäusewand kann eine fünfte Durchgangsöffnung aufweisen. Die dritte Ausgangsöffnung und die fünfte Eingangsöffnung können als die fünfte Durchgangöffnung ausgebildet sein. Die fünfte Durchgangsöffnung übernimmt in diesem Fall die Funktion der dritten Ausgangsöffnung und der fünften Eingangsöffnung. In der fünften Durchgangsöffnung kann der Antrieb, insbesondere die Antriebswelle, und/oder die dritte Eingangswelle und/oder die vierte Eingangswelle angeordnet sein. Im Speziellen können sich der Antrieb, insbesondere die Antriebswelle, und/oder die dritte Eingangswelle und/oder die vierte Eingangswelle durch die dritte Durchgangsöffnung erstrecken.

Die zweite oder dritte gemeinsame Gehäusewand kann eine sechste Durchgangsöffnung oder die vierte Ausgangsöffnung aufweisen. Die vierte Ausgangsöffnung kann als die sechste Durchgangsöffnung ausgebildet sein. Die sechste Durchgangsöffnung übernimmt in diesem Fall die Funktion der vierten Ausgangsöffnung. In der sechsten Durchgangsöffnung kann zur Durchführung und/oder zum Anbinden und/oder Verbinden des Abtriebs, insbesondere der Abtriebswelle, ausgebildet sein. In der sechsten Durchgangsöffnung kann der Abtrieb, insbesondere die Abtriebswelle, angeordnet sein. Im Speziellen kann sich der Abtrieb, insbesondere die Abtriebswelle, durch die sechste Durchgangsöffnung erstrecken.

Die erste bis achte Eingangsöffnung und/oder die erste bis sechste Ausgangsöffnung und/oder die erste bis sechste Durchgangsöffnung können jeweils als Durchgang oder Bohrung, insbesondere als zentraler Durchgang oder als zentrale Bohrung, ausgebildet und/oder ausgeführt sein. Im Speziellen können die erste bis achte Eingangsöffnung und/oder die erste bis sechste Ausgangsöffnung und/oder die erste bis sechste Durchgangsöffnung jeweils als Wellendurchführung, insbesondere zentrale Wellendurchführungen, für die dritte und/oder vierte Eingangswelle und/oder die Vorgelegewelle und/oder die erste Ausgangswelle und/oder den Antrieb, insbesondere die Antriebswelle, und/oder die Kupplungsantriebswelle und/oder den Abtrieb ausgebildet und/oder ausgeführt sein.

Vorteilhafterweise kann die Gehäuseanordnung dadurch auf einfache Art und Weise anbindbar sein und/oder modular aufgebaut sein.

Weitere Anschlussmöglichkeiten für weitere Gehäusemodule können an der Gehäusewand des ersten und/oder zweiten und/oder dritten und/oder vierten Gehäusemoduls vorgesehen sein, um beispielsweise das erste und/oder zweite Differenzialgetriebe oder den ersten Leistungsausgang an die sich durch die eingangs- und/oder ausgangsseitigen Gehäusewände erstreckende Vorgelegewelle und/oder Antrieb und/oder Abtrieb anschließen zu können.

Die Getriebegehäuseanordnung kann somit vorteilhafterweise modular aufgebaut sein. Modular soll in diesem Zusammenhang bedeuten, dass die Getriebegehäuseanordnung aus mehreren Gehäusemodulen zusammengesetzt ist und für jede der oben beschriebenen Übersetzungseinheiten ein Gehäusemodul ausgebildet ist, welches im Zusammenbau mit den anderen Gehäusemodulen die gesamte Getriebegehäuseanordnung darstellt. Die benachbarten und/oder aneinander anliegenden Gehäusewände können dabei als getrennte oder gemeinsame Gehäusewände ausgebildet sein. Eine derartige Anordnung ermöglicht, dass sich ein Wechsel der Übersetzungseinheiten leicht und kostengünstig ausführen lässt, ohne die gesamte Antriebsvorrichtung komplett demontieren zu müssen. Hier werden die Vorteile einer Getriebegehäuseanordnung und/oder Antriebsvorrichtung im Hinblick auf einen geringeren Montageaufwand, hohen Grad an Kompatibilität und Variabilität deutlich. Im Weiteren kann vorteilhafterweise kann durch die Getriebegehäuseanordnung die Antriebsvorrichtung modular angeordnet und/oder modular aufgebaut sein.

Das erste und zweite und/oder dritte und/oder vierte Gehäusemodule können entlang einer Längsachse der Getriebegehäuseanordnung, und insbesondere einer Längsachse der Arbeitsmaschine, angeordnet sein. Die Längsachse der Getriebegehäuseanordnung und eine Längsachse der Arbeitsmaschine und/oder der Antrieb können identisch oder parallel sein.

Die Erfindung betrifft weiter eine Arbeitsmaschine mit einer Antriebsvorrichtung, insbesondere eine Antriebsvorrichtung nach einem der Ansprüche 1 bis 10, oder eine Getriebegehäuseanordnung, insbesondere eine Getriebegehäuseanordnung nach einem der Ansprüche 11 bis 13. Die Arbeitsmaschine kann eine Baumaschine oder ein Zugfahrzeug, bevorzugt ein landwirtschaftliches Zugfahrzeug, beispielsweise ein Traktor oder Schlepper sein. Die Arbeitsmaschine weist die oben beschriebenen Vorteile der Antriebsvorrichtung und/oder Getriebegehäuseanordnung auf.

Die Arbeitsmaschine umfasst die Antriebsvorrichtung oder die Getriebegehäuseanordnung. Die Antriebsvorrichtung ist zum Antreiben der Arbeitsmaschine ausgebildet. Die Arbeitsmaschine kann eine, zwei oder mehrere Achse(n) umfassen. Die Arbeitsmaschine kann mit einer Drehzahl und/oder Kraft und/oder einem Drehmoment des Motors antreibbar sein.

Die Steuereinheit kann zur Steuerung und/oder Regelung, insbesondere zum Einstellen und/oder Verstellen, der Arbeitsmaschine, insbesondere des Motors eingerichtet sein. Die Arbeitsmaschine kann eine Ein- und Ausgabeeinheit umfassen. Die Steuereinheit kann mit der Ein- und Ausgabeeinheit signalverbunden und/oder wirkend gekoppelt und/oder signalübertragend und/oder datenleitend verbunden sein, und/oder mit der Ein- und Ausgabeeinheit ansteuerbar und/oder einstellbar und/oder verstellbar sein. Die Ein- und Ausgabeeinheit kann in die Steuereinheit oder umgekehrt integriert sein. Der Bediener der Arbeitsmaschine kann mit der oder durch die Ein- und Ausgabeeinheit beispielsweise eine Geschwindigkeit der Arbeitsmaschine einstellen und/oder verstellen.

Die Arbeitsmaschine kann ausserdem eines oder mehrere Hilfsaggregate umfassen, beispielsweise eine Pumpe und/oder einen Kühler etc.. Die Hilfsaggregate können ein Bestandteil der Hydraulik des Antriebsvorrichtung sein. Die Arbeitsmaschine kann den ersten Leistungsausgang, insbesondere die Zapfwelleneinheit umfassen. Die Steuereinheit kann konfiguriert sein, die Antriebsvorrichtung und/oder die Achse und/oder Arbeitsmaschine mit einem Fahrsignal einzustellen und/oder zu verstellen und/oder anzusteuern und mit dem oder basierend auf dem Fahrsignal eine Geschwindigkeit der Arbeitsmaschine einzustellen und/oder zu verstellen, insbesondere zu erhöhen oder zu verringern. Die Arbeitsmaschine kann das oder die Bodeneingriffsmittel umfassen. Die Bodeneingriffsmittel können die Arbeitsmaschine auf dem Boden abstützen und/oder tragen. Ein Zugfahrzeugrahmen der Arbeitsmaschine, insbesondere ein erstes und zweites Rahmenelement, kann sich auf die Bodeneingriffsmittel abstützen. Die Bodeneingriffsmittel können Räder oder Raupen oder Ketten sein. Die Bodeneingriffsmittel können insbesondere Vorderräder und Hinterräder sein. Die Arbeitsmaschine kann einen Geschwindigkeitssensor, beispielsweise einen Drehzahlsensor, zur Erfassung einer Geschwindigkeit der Arbeitsmaschine umfassen. Im Speziellen kann die Steuereinheit konfiguriert sein, eine Kraft und/oder ein Drehmoment und/oder eine Drehzahl des Motors und/oder des ersten und/oder zweiten Variators mit dem Fahrsignal einzustellen und/oder zu verstellen und/oder anzusteuern.

In Ausgestaltung der Erfindung umfasst die Arbeitsmaschine zwei Rahmenelemente, insbesondere ein erstes und ein zweites Rahmenelement. Die die Antriebsvorrichtung, bevorzugt die Getriebegehäuseanordnung, besonders bevorzugt das erste und/oder zweite und/oder dritte und/oder vierte Gehäusemodul, ist an, insbesondere zwischen, den Rahmenelementen angeordnet. Die Rahmenelemente, insbesondere das erste und zweite Rahmenelement, können parallel zur Längsachse der Arbeitsmaschine angeordnet sein. Die Getriebegehäuseanordnung, insbesondere das erste und zweite Gehäusemodule, können entlang der Längsachse der Arbeitsmaschine angeordnet sein. Die Längsachse der Getriebegehäuseanordnung und die Längsachse der Arbeitsmaschine können identisch oder parallel sein. Das erste und/oder zweite und/oder dritte und/oder vierte Gehäusemodul können zwischen den Rahmenelementen angeordnet sein, insbesondere auch an diesen befestigt und/oder gelagert sein. Ebenso kann die Zapfwelleneinheit an den Rahmenelementen angeordnet sein, insbesondere an diesen befestigt und/oder gelagert sein.

Die Schaltelemente, insbesondere deren Ventile oder Ventileinrichtungen oder Aktuatoren, und/oder der Motor und/oder der erste Leistungsausgang, insbesondere die Zapfwelleneinheit, können mit der Steuereinheit ansteuerbar und/oder einstellbar und/oder verstellbar, bevorzugt steuerbar und/oder regelbar sein. Die Steuereinheit kann Signale zur Steuerung des Betriebs der Antriebsvorrichtung und/oder der Arbeitsmaschine versenden und/oder empfangen. Zweckmäßigerweise können die Signale über ein geeignetes Datenkommunikationsnetzwerk bereitgestellt werden, beispielsweise eines, das dem ISOBUS- und/oder CAN-Standard entspricht. Die Steuereinheit kann als ein elektronisches Modul, ein eingebettetes System, eine Recheneinheit, ein Computer, als ein Modul zum Steuern und/oder Regeln der Antriebsvorrichtung und/oder der Achse und/oder der Arbeitsmaschine ausgebildet sein. Die Steuereinheit kann einen oder mehrere Prozessoren, einen Speicher und/oder alle Software, Hardware, Algorithmen, Anschlüsse, insbesondere auch Sensoren, umfassen, die für die Steuerung und/oder Regelung der Antriebsvorrichtung und/oder der Achse und/oder der Arbeitsmaschine erforderlich sind. Verfahren können als Programm oder Algorithmus ausgebildet sein, welche auf und/oder mit der Steuereinheit ausführbar sind. Die Steuereinheit kann jedes Gerät umfassen, das Daten von verschiedenen Sensoren analysiert, Daten vergleichen und die erforderlichen Entscheidungen treffen, um den Betrieb der Antriebsvorrichtung und/oder der Achse und/oder der Arbeitsmaschine und die erforderlichen Aufgaben zur Steuerung und/oder Regelung des Betriebs der Antriebsvorrichtung und/oder der Achse und/oder der Arbeitsmaschine, zu steuern und/oder zu regeln und/oder auszuführen. Die Steuereinheit kann mit den Bauteilen der Antriebsvorrichtung und/oder der Arbeitsmaschine, also insbesondere dem ersten Leistungsausgang und/oder dem Motor und/oder den Sensoren, beispielsweise der Geschwindigkeitssensor und/oder der oder den Drehzahl- und/oder Drehmomentsensor(en) signalverbunden und/oder wirkend gekoppelt und/oder signalübertragend und/oder datenleitend verbunden sein. Unter einer signalverbunden und/oder wirkend gekoppelten und/oder signalübertragenden und/oder datenleitenden Verbindung kann dabei unter anderem verstanden werden, dass ein Austausch von Signalen bzw. Daten zwischen den verbundenen Bauteilen und der Steuereinheit stattfinden kann. Signale können beispielsweise von der Steuereinheit empfangen und versendet werden und/oder verarbeitet und/oder bearbeitet werden. Die Verbindung zwischen der Steuereinheit sowie den Bauteilen bzw. Komponenten der Antriebsvorrichtung und/oder der Achse und/oder der Arbeitsmaschine kann kabelgebunden, insbesondere also mit Kabel, und/oder kabellos, also per Funk, beispielsweise mit Bluetooth oder WLAN realisiert sein. Die Kommunikation kann beispielsweise mittels Isobus, CAN-Bus oder ähnlichem erfolgen. Die Steuereinheit kann unmittelbar mit, insbesondere mit der in einer Kabine der Arbeitsmaschine angeordneten, Ein- und Ausgabeeinheit in Verbindung stehen, durch welche von einer Bedienperson eingegebene Daten an die Steuereinheit übertragen oder von dieser empfangen und ausgegeben werden können. Die Steuereinheit kann in die Ein- und Ausgabeeinheit integriert sein, oder umgekehrt.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. Die Zeichnungen zeigen:
- Fig. 1: eine schematische Darstellung eines ersten Ausführungsbeispiels einer erfindungsgemässen Arbeitsmaschine mit einer erfindungsgemässen Antriebsvorrichtung, und
- Fig. 2: eine schematische Darstellung eines ersten Ausführungsbeispiels der erfindungsgemässen Antriebsvorrichtung, und
- Fig. 3: eine schematische Darstellung eines zweiten Ausführungsbeispiels der erfindungsgemässen Antriebsvorrichtung, und
- Fig. 4: eine schematische Darstellung eines dritten Ausführungsbeispiels der erfindungsgemässen Antriebsvorrichtung, und
- Fig. 5: eine schematische Darstellung eines vierten Ausführungsbeispiels der erfindungsgemässen Antriebsvorrichtung, und
- Fig. 6: eine schematische Darstellung eines fünften Ausführungsbeispiels der erfindungsgemässen Antriebsvorrichtung, und
- Fig. 7: eine detaillierte schematische Darstellung eines Ausführungsbeispiels der ersten Übersetzungseinheit der erfindungsgemässen Antriebsvorrichtung, und
- Fig. 8: detaillierte schematische Darstellung eines Ausführungsbeispiels der zweiten Übersetzungseinheit der erfindungsgemässen Antriebsvorrichtung, und
- Fig. 9: detaillierte schematische Darstellung eines Ausführungsbeispiels der dritten Übersetzungseinheit der erfindungsgemässen Antriebsvorrichtung, und
- Fig. 10: eine detaillierte schematische Darstellung eines Ausführungsbeispiels der vierten Übersetzungseinheit der erfindungsgemässen Antriebsvorrichtung, und
- Fig. 11: eine detaillierte schematische Darstellung eines weiteren Ausführungsbeispiels der zweiten Übersetzungseinheit der erfindungsgemässen Antriebsvorrichtung, und
- Fig. 12: eine detaillierte schematische Darstellung eines weiteren Ausführungsbeispiels der zweiten Übersetzungseinheit der erfindungsgemässen Antriebsvorrichtung, und
- Fig. 13: eine schematische Darstellung eines ersten Ausführungsbeispiel einer erfindungsgemässen Getriebegehäuseanordnung, und
- Fig. 14: eine schematische Darstellung eines zweiten Ausführungsbeispiel einer erfindungsgemässen Getriebegehäuseanordnung, und
- Fig. 15: eine schematische Darstellung eines dritten Ausführungsbeispiel einer erfindungsgemässen Getriebegehäuseanordnung, und
- Fig. 16: eine detaillierte schematische Darstellung eines weiteren Ausführungsbeispiels der erfindungsgemässen Arbeitsmaschine mit einer erfindungsgemässen Getriebegehäuseanordnung, und

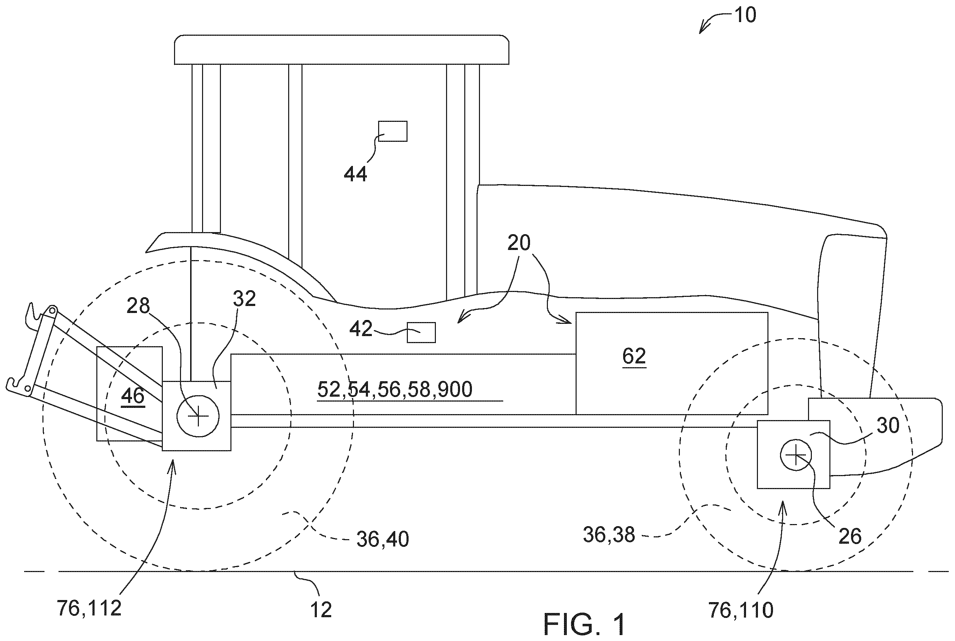

Figur 1 zeigt eine schematische Darstellung eines ersten Ausführungsbeispiels einer erfindungsgemässen Arbeitsmaschine 10, hier eines landwirtschaftlichen Zugfahrzeugs oder Traktors bzw. Schleppers, mit einer erfindungsgemässen Antriebsvorrichtung 20. Die Arbeitsmaschine 10 ist mit der Antriebsvorrichtung 20 antreibbar.

Die Antriebsvorrichtung 20 umfasst einen Antrieb 52, der insbesondere als Antriebswelle 50 ausgebildet sein kann, und einen Abtrieb 54, der insbesondere als eine Abtriebswelle 60 ausgebildet sein kann, und eine erste und zweite Übersetzungseinheit 56, 58. Die Arbeitsmaschine 10, insbesondere die Antriebsvorrichtung 20, umfasst eine erste Fahrzeugachse 26 und eine zweite Fahrzeugachse 28. Die erste Fahrzeugachse 26 kann eine Vorderachse und die zweite Fahrzeugachse 28 eine Hinterachse sein. Ausserdem kann die erste Fahrzeugachse 26 als lenkbare Achse ausgeführt sein. Die Arbeitsmaschine 10 kann eines oder mehrere Bodeneingriffsmittel 36, hier in Form von Rädern 38, 40 dargestellt, aufweisen, welche mit einem Untergrund 12 zur Übertragung von Antriebskräften in Eingriff stehen und/oder durch die sich die Arbeitsmaschine 10 auf dem Untergrund 12 abstützt. Die Arbeitsmaschine 10, insbesondere die Antriebsvorrichtung 20, kann einen Fahrantrieb 76, insbesondere einen Vorderachsantrieb 110 und einen Hinterachsantrieb 112 umfassen. Der Fahrantrieb 76 kann die erste Fahrzeugachse 26 und/oder die zweite Fahrzeugachse 28 und/oder ein erstes Differenzialgetriebe 30 und/oder ein zweites Differenzialgetriebe 32 und/oder das oder die Bodeneingriffsmittel 36 umfassen. Die Arbeitsmaschine 10, insbesondere die Antriebsvorrichtung 20, kann einen Vorderachsantrieb 110 aufweisen, der die erste Fahrzeugachse 26 und/oder das erste Differenzialgetriebe 30, also insbesondere ein Vorderachsdifferenzial, und/oder das oder die Bodeneingriffsmittel 36 umfassen kann. Ebenso kann die Arbeitsmaschine 10, oder insbesondere die Antriebsvorrichtung 20, einen Hinterachsantrieb 112 aufweisen, der die zweite Fahrzeugachse 28 und/oder das zweite Differenzialgetriebe 32, also insbesondere ein Hinterachsdifferenzial, und/oder das oder die Bodeneingriffsmittel 36 umfassen kann. Die erste Fahrzeugachse 26 kann mit dem ersten Differenzialgetriebe 30 verbunden sein. Die zweite Fahrzeugachse 28 kann mit dem zweiten Differenzialgetriebe 32 verbunden sein.

Der Abtrieb 54 kann mit dem Fahrantrieb 76, insbesondere dem ersten und/oder zweiten Differenzialgetriebe 30, 32, insbesondere nur mit dem zweiten Differenzialgetriebe 32, verbunden sein. Der Abtrieb 54 kann über das zweite oder mit dem zweiten Differenzialgetriebe 32 mit der zweiten Fahrzeugachse 28 verbunden sein. Über das erste oder mit dem ersten Differenzialgetriebe 30 und/oder das zweite oder mit dem zweiten Differenzialgetriebe 32 kann eine Kraft und/oder ein Drehmoment und/oder eine Drehzahl vom Abtrieb 54 an die erste und/oder zweite Fahrzeugachse 26, 28, und somit insbesondere an die Bodeneingriffsmittel 36, übertragbar sein.

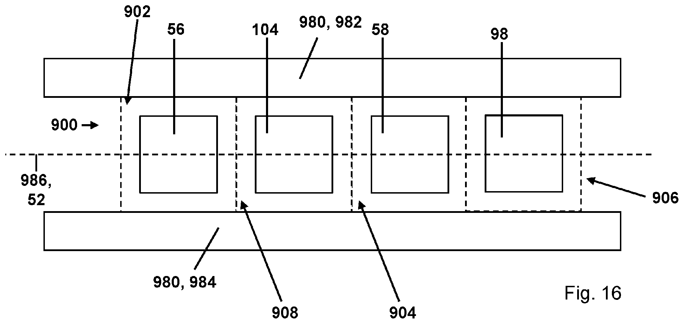

Die Antriebsvorrichtung 20 oder die Arbeitsmaschine 10 kann einen Motor 62 umfassen. Der Motor 62 kann mit dem Antrieb 52 verbindbar oder verbunden sein. Mit der Antriebsvorrichtung 20, insbesondere dem Motor 62, kann eine Drehbewegung und/oder Kraft und/oder ein Drehmoment und/oder eine Drehzahl erzeugbar und, insbesondere über die erste und/oder eine zweite Übersetzungseinheit 56, 58, auf den Abtrieb 54, auf die erste und/oder zweite Fahrzeugachse 26, 28 übertragbar sein. Die erste und/oder zweite Fahrzeugachse 26, 28 wandeln die Drehbewegung und/oder Kraft und/oder das Drehmoment und/oder die Drehzahl in eine Drehbewegung und/oder Kraft und/oder ein Drehmoment und/oder Drehzahl eines oder mehrerer Bodeneingriffsmittel 36 und somit in einen Schub der Arbeitsmaschine 10 um. Die Arbeitsmaschine 10 kann ausserdem einen Zugfahrzeugrahmen umfassen, der insbesondere ein erstes und zweites Rahmenelement 960, 962, 964 (siehe Figur 16) aufweisen kann. Der Zugfahrzeugrahmen kann insbesondere von den an der ersten und/oder zweiten Fahrzeugachse 28, 30 aufgehängten Bodeneingriffsmitteln 36, insbesondere den Rädern 38, 40 getragen werden kann. Im Speziellen sind ein erstes Paar Räder 38 an der ersten Fahrzeugachse 26 und ein zweites Paar Räder 40 an der zweiten Fahrzeugachse 28 angeordnet sein. Dabei können die Durchmesser der Rädern 38, 40 voneinander abweichen, insbesondere kann der Durchmesser des ersten Paars Räder 38 kleiner als der Durchmesser des zweiten Paars Räder 40 sein. Alternativ können die Bodeneingriffsmittel 36 auch als Raupen oder Ketten ausgebildet und angeordnet sein.

Die Arbeitsmaschine 10, insbesondere die Antriebsvorrichtung 20, kann einen ersten Leistungsausgang 46 umfassen. Der erste Leistungsausgang 46 kann eine Zapfwelleneinheit 90 umfassen. Der erste Leistungsausgang 46 kann zum Antreiben eines Arbeitsgeräts (nicht gezeigt) vorgesehen sein, das über eine Schnittstelle (z.B. Dreipunktschnittstelle) an der Arbeitsmaschine 10 anbringbar ist.

Die Arbeitsmaschine 10, insbesondere alternativ oder zusätzlich die Antriebsvorrichtung 20, kann eine Steuereinheit 42 und/oder eine Ein- und Ausgabeeinheit 44 umfassen. Die Steuereinheit 42 kann mit der Ein- und Ausgabeeinheit 44 signalverbunden und/oder wirkend gekoppelt und/oder signalübertragend und/oder datenleitend verbunden sein. Im Speziellen kann die Steuereinheit 42 unmittelbar mit der in einer Kabine der Arbeitsmaschine 10 angeordneten Ein- und Ausgabeeinheit 44 Verbindung stehen, durch welche von einer Bedienperson eingegebene Daten an die Steuereinheit 42 übertragen oder von dieser empfangen und ausgegeben werden können. Die Antriebsvorrichtung 20, und/oder insbesondere die Arbeitsmaschine 10, kann mit der Steuereinheit 42 einstellbar und/oder verstellbar sein. Die Steuereinheit 42 ist mit dem Motor 62 signalverbunden und/oder wirkend gekoppelt und/oder signalübertragend und/oder datenleitend verbunden. Die Steuereinheit 42 ist konfiguriert, die Drehzahl und/oder das Drehmoment und/oder die Kraft der Antriebsvorrichtung 20, insbesondere des Motors 62 einzustellen und/oder zu verstellen, insbesondere diese anzusteuern und/oder zu steuern und/oder zu regeln.

Die Steuereinheit 42 kann konfiguriert sein, eine vorgebbare Drehzahl und/oder ein vorgebbares Drehmoment und/oder eine vorgebbare Kraft der Antriebsvorrichtung 20, insbesondere des Motors 62 einzustellen und/oder zu verstellen, insbesondere diese anzusteuern und/oder zu steuern und/oder zu regeln. Die Steuereinheit 42 kann konfiguriert sein, die Antriebsvorrichtung 20, insbesondere alternativ oder zusätzlich die Arbeitsmaschine 10, einzustellen und/oder zu verstellen, um die Drehzahl und/oder das Drehmoment und/oder die Kraft des Motors 62 einzustellen und/oder zu verstellen, insbesondere zu steuern und/oder zu regeln.

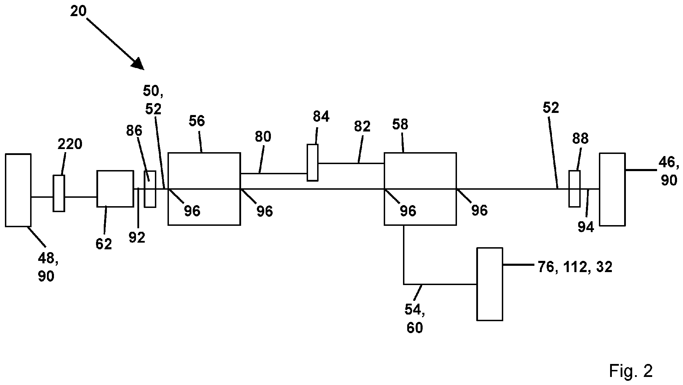

Figur 2 zeigt eine schematische Darstellung eines ersten Ausführungsbeispiels der erfindungsgemässen Antriebsvorrichtung 20. Die in Figur 2 gezeigte Antriebsvorrichtung 20 entspricht im Wesentlichen der in Figur 1 Antriebsvorrichtung 20, sodass im Folgenden lediglich auf Details und/oder Unterschiede eingegangen wird. Die in Figur 1 dargestellte Arbeitsmaschine 10 kann die in Figur 2 dargestellte Antriebsvorrichtung 20 umfassen.

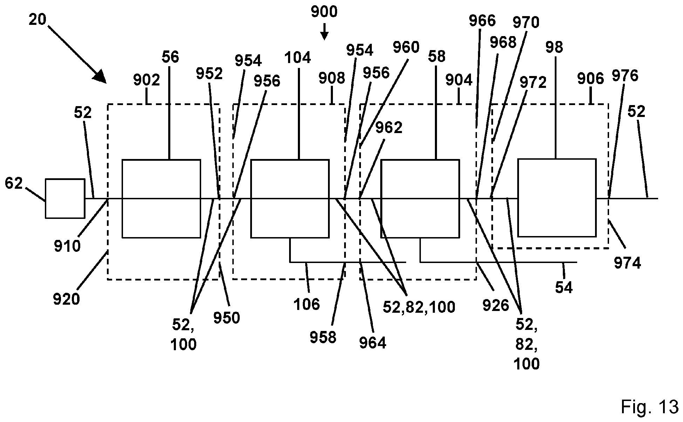

Die Antriebsvorrichtung 20 für eine Arbeitsmaschine 10 oder eine Getriebegehäuseanordnung 900 (siehe Figuren 13 bis 16) gemäss Figur 2 umfasst einen Antrieb 52, der insbesondere als Antriebswelle 50 ausgebildet sein kann, und einen Abtrieb 54, der insbesondere als Abtriebswelle 60 ausgebildet sein kann. Die Antriebsvorrichtung 20 umfasst ausserdem die erste Übersetzungseinheit 56, wobei mit der ersten Übersetzungseinheit 56 wenigstens eine Windungsgangstufe ausbildbar ist, und die zweite Übersetzungseinheit 58.

Die erste Übersetzungseinheit 56 ist mit der zweiten Übersetzungseinheit 58 verbindbar oder verbunden. Die zweite Übersetzungseinheit 58 ist mit dem Abtrieb 54 verbindbar oder verbunden. Die erste Übersetzungseinheit 56 ist ausgangsseitig mit der zweiten Übersetzungseinheit 58 verbunden. Die zweite Übersetzungseinheit 58 ist eingangsseitig mit der ersten Übersetzungseinheit 56 verbunden. Im Speziellen kann die erste Übersetzungseinheit 56 mit der ersten oder durch die erste oder über die erste Ausgangswelle 80 mit der zweiten Übersetzungseinheit 58 verbindbar oder verbunden sein, insbesondere vorliegend verbunden sein. Die zweite Übersetzungseinheit 58 kann eingangsseitig mit der ersten Ausgangswelle 80 verbindbar oder verbunden sein. Alternativ, wie vorliegend gezeigt, kann die Antriebsvorrichtung 20, insbesondere die zweite Übersetzungseinheit 58, eine dritte Eingangswelle 82 umfassen. Die erste Ausgangswelle 80 kann dann alternativ mit einer ersten oder durch oder über eine erste Übersetzungsstufe 84 mit der zweiten Übersetzungseinheit 58, insbesondere der dritten Eingangswelle 82, verbunden sein. Die zweite Übersetzungseinheit 58 ist abtriebsseitig mit dem Abtrieb 54 verbunden. Der Abtrieb kann ausserdem mit dem Fahrantrieb 76, bevorzugt dem Hinterachsantrieb 112, besonders bevorzugt dem zweiten Differenzialgetriebe 32 verbindbar oder verbunden sein.

Der Motor 62 kann mit dem Antrieb 52, insbesondere über ein achtes oder mit einem achten Schaltelement 86, verbindbar oder verbunden sein. Mit dem Motor kann so eine Drehzahl und/oder ein Drehmoment und/oder eine Kraft in die erste Übersetzungseinheit 56 einleitbar sein. Die erste Übersetzungseinheit 56 kann im Drehmoment- und/oder Leistungsfluss vor der zweiten Übersetzungseinheit 58 angeordnet sein.

Die Antriebsvorrichtung 20 kann ausserdem den ersten Leistungsausgang 46 umfassen. Der Motor 62 kann mit dem ersten Leistungsausgang 46 verbindbar oder verbunden sein. Im Speziellen kann der Motor 62 mit dem ersten Leistungsausgang 46 über den oder durch den Antrieb 52 verbindbar oder verbunden sein. Der Motor 62 kann dabei mit einer Verbindungswelle 92 mit dem achten Schaltelemente 86 verbunden sein. Der Motor 62 kann dabei durch das oder über das achte Schaltelement 86 mit dem Antrieb 52 verbindbar sein. Der Antrieb 52 kann mit einem neunten oder durch ein neuntes Schaltelement 88 mit dem ersten Leistungsausgang 46 verbindbar oder verbunden sein. Das neunte Schaltelement kann durch eine oder mit einer Verbindungswelle 94 mit dem ersten Leistungsausgang 46 verbindbar oder verbunden sein. Der erste Leistungsausgang 46 kann eine Zapfwelleneinheit 90 umfassen. Die Zapfwelleneinheit 90 kann ein Zapfwellengetriebe und/oder eine Zapfwelle umfassen. Das neunte Schaltelement 88 und/oder die Zapfwelleneinheit 90, insbesondere das Zapfwellengetriebe, kann antriebsseitig mit dem Antrieb 52 verbunden sein. Ausserdem kann die Zapfwelleneinheit 90, insbesondere das Zapfwellengetriebe, abtriebsseitig mit der Zapfwelle verbindbar oder verbunden sein. Die erste und/oder zweite Übersetzungseinheit 56, 58 können ausserdem einen Durchgang 96, insbesondere einen zentralen Durchgang, für den Antrieb 52, also insbesondere die Antriebswelle, aufweisen.

Die Antriebsvorrichtung 20 kann ausserdem einen zweiten Leistungsausgang 48 umfassen. Der Motor 62 kann mit dem zweiten Leistungsausgang 48 verbindbar oder verbunden sein. Im Speziellen kann der Motor 62 mit dem zweiten Leistungsausgang 48 über den oder durch den Antrieb 52 verbindbar oder verbunden sein. Der Motor 62 kann dabei mit einer Verbindungswelle 92 mit dem achten Schaltelemente 86 verbunden sein. Der Motor 62 kann dabei durch das oder über das achte Schaltelement 86 mit dem Antrieb 52 verbindbar sein. Der Antrieb 52 kann mit einem neunten oder durch ein neuntes Schaltelement 88 mit dem ersten Leistungsausgang 46 verbindbar oder verbunden sein. Das neunte Schaltelement kann durch eine oder mit einer Verbindungswelle 94 mit dem ersten Leistungsausgang 46 verbindbar oder verbunden sein. Der erste Leistungsausgang 46 kann eine Zapfwelleneinheit 90 umfassen. Die Zapfwelleneinheit 90 kann ein Zapfwellengetriebe und/oder eine Zapfwelle umfassen. Das neunte Schaltelement 88 und/oder die Zapfwelleneinheit 90, insbesondere das Zapfwellengetriebe, kann antriebsseitig mit dem Antrieb 52 verbunden sein.

Ausserdem kann die Zapfwelleneinheit 90, insbesondere das Zapfwellengetriebe, abtriebsseitig mit der Zapfwelle verbindbar oder verbunden sein. Die erste und/oder zweite Übersetzungseinheit 56, 58 können ausserdem einen Durchgang 96, insbesondere einen zentralen Durchgang, für den Antrieb 52, also insbesondere die Antriebswelle 50, aufweisen. Die Figuren 2 bis 4 beschreiben den Leistungsfluss der Antriebsvorrichtung 20 vom Motor 62 zum Antrieb 54 schematisch.

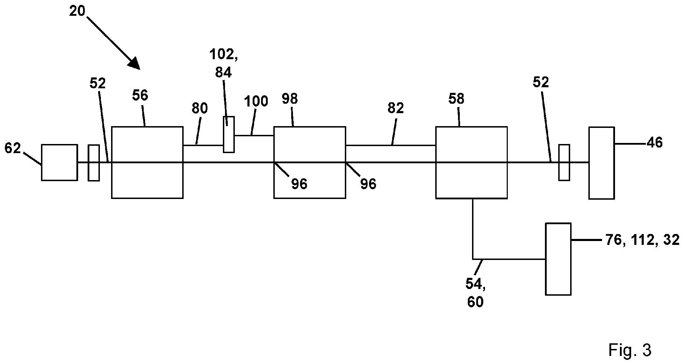

Figur 3 zeigt eine schematische Darstellung des zweiten Ausführungsbeispiels der erfindungsgemässen Antriebsvorrichtung 20. Die in Figur 3 gezeigte Antriebsvorrichtung 20 entspricht im Wesentlichen der in den Figuren 1 und 2 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 3 dargestellte Antriebsvorrichtung 20 umfassen.

Die Antriebsvorrichtung 20 umfasst eine dritte Übersetzungseinheit 98, die insbesondere eine Reversiereinheit oder Lastschaltwendeeinheit sein kann. Die dritte Übersetzungseinheit 98 kann eingangsseitig, mit der ersten Übersetzungseinheit 56 verbindbar oder verbunden sein. Die dritte Übersetzungseinheit kann ausgangsseitig mit der zweiten Übersetzungseinheit 58 verbindbar oder verbunden sein.

Die dritte Übersetzungseinheit 98 ist eingangsseitig mit der ersten Ausgangswelle 80 verbindbar oder verbunden sein. Alternativ, wie vorliegend gezeigt, kann die Antriebsvorrichtung 20, insbesondere die dritte Übersetzungseinheit 98, eine vierte Eingangswelle 100 umfassen. Die erste Ausgangswelle 80 ist mit der vierten Eingangswelle 100 über eine dritte oder mit einer dritten Übersetzungsstufe 102 verbindbar oder verbunden. Da in dieser Ausführung auf die Verbindung der ersten mit der zweiten Übersetzungseinheit 56, 58 über die erste Übersetzungsstufe 84 verzichtet werden kann, kann die dritte Übersetzungsstufe 102 auch als erste Übersetzungsstufe 84 ausgebildet sein. Im Speziellen ist die erste Übersetzungseinheit 56 über die erste Ausgangswelle 80 und die dritte Übersetzungsstufe 102 mit der vierten Eingangswelle 100 verbunden und über die vierte Eingangswelle 100 mit der dritten Übersetzungseinheit 98 verbunden. Die vierte Eingangswelle 100 ist mit der dritten oder durch die dritte oder über die dritte Übersetzungseinheit 98 mit der dritten Eingangswelle 82 verbindbar oder verbunden sein.

Im Speziellen kann die erste Übersetzungseinheit 56 aber auch mit der ersten oder durch die erste oder über die erste Ausgangswelle 80 mit der dritten Übersetzungseinheit 98 verbindbar oder verbunden sein. Im Speziellen kann die erste Ausgangswelle 80 mit der dritten oder durch die dritte oder über die dritte Übersetzungseinheit 98 mit der dritten Eingangswelle 82 verbindbar oder verbunden sein. Im Speziellen kann die dritte Übersetzungseinheit 98 mit der dritten oder durch die dritte oder über die dritte Eingangswelle 82 mit der zweiten Übersetzungseinheit 58 verbindbar oder verbunden sein. Insgesamt kann die erste Übersetzungseinheit 56 über oder durch die dritte Übersetzungseinheit 98 mit der zweiten Übersetzungseinheit 58 verbindbar oder verbunden sein.

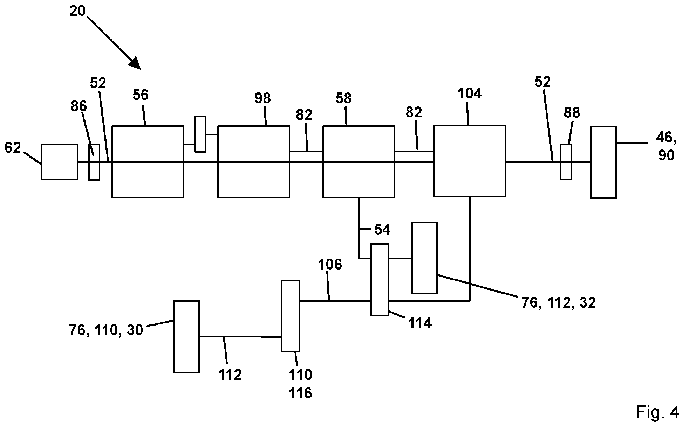

Figur 4 zeigt eine schematische Darstellung des dritten Ausführungsbeispiels der erfindungsgemässen Antriebsvorrichtung 20. Die in Figur 4 gezeigte Antriebsvorrichtung 20 entspricht im Wesentlichen der in den Figuren 1 bis 3 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 4 dargestellte Antriebsvorrichtung 20 umfassen.

Die Antriebsvorrichtung 20 umfasst eine vierte Übersetzungseinheit 104. Die vierte Übersetzungseinheit 104 ist eingangsseitig mit der zweiten und/oder dritten Übersetzungseinheit 58, 98, insbesondere der dritten Eingangswelle 82, verbindbar oder verbunden. Die vierte Übersetzungseinheit 104 kann eingangsseitig aber auch mit der ersten Übersetzungseinheit 56, insbesondere der ersten Ausgangswelle 80, verbindbar oder verbunden sein. Die vierte Übersetzungseinheit 104 ist, insbesondere ausgangsseitig, mit einer Vorgelegewelle 106 verbindbar oder verbunden.

Der Abtrieb 54 kann mit der Vorgelegewelle 106 verbindbar oder verbunden sein. Dazu kann die Vorgelegewelle 106, beispielsweise mit einem oder durch ein Kopplungszahnrad 114, mit dem Abtrieb 54 verbunden sein. Das Kopplungszahnrad 114 kann beispielsweise mit einer ersten oder zweiten Stirnradstufe 200, 202, welche die zweite Übersetzungseinheit 58 mit dem Abtrieb 54 verbindet, in Eingriff stehen, insbesondere kämmen. Ausserdem kann die Vorgelegewelle 106 mit dem Fahrantrieb 76, bevorzugt dem Vorderachsantrieb 110, besonders bevorzugt dem ersten Differenzialgetriebe 30 verbindbar oder verbunden sein. Die Vorgelegewelle 106 kann mit einer vierten oder über eine vierte Übersetzungsstufe 110 und/oder einem weiteren Schaltelement 116 mit einer weiteren Welle 112 verbindbar oder verbunden sein. Die Vorgelegewelle 106 oder die weitere Welle 112 kann mit dem ersten Differenzialgetriebe 30 oder dem Vorderachsdifferenzial verbunden sein.

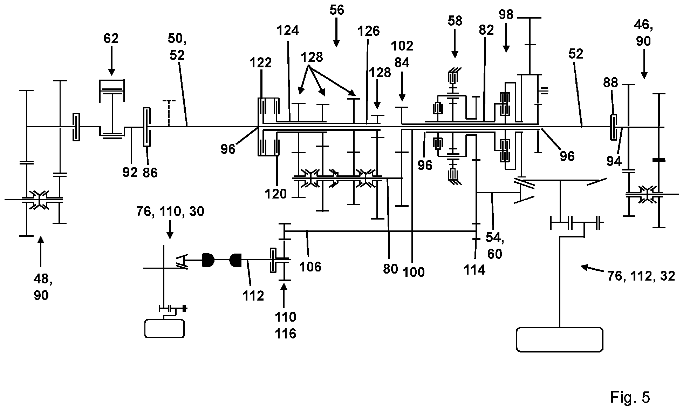

Figur 5 zeigt eine schematische Darstellung des vierten Ausführungsbeispiels der erfindungsgemässen Antriebsvorrichtung 20. Die in Figur 5 gezeigte Antriebsvorrichtung 20 entspricht im Wesentlichen der in den Figuren 1 bis 4 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 5 dargestellte Antriebsvorrichtung 20 umfassen.

Die erste Übersetzungseinheit 56 umfasst ein erstes Schaltelement 120 und ein zweites Schaltelement 122. Die Eingangsseite 130 des ersten und/oder zweiten Schaltelements 120, 122 ist mit dem Antrieb 52, insbesondere der Antriebswelle 50, verbunden. Die Antriebsvorrichtung 20 umfasst den Motor 62 und der Motor 62 ist mit dem Antrieb 52, insbesondere der Antriebswelle 50, über das oder durch das achte Schaltelement 86 verbindbar. Der Motor 62 ist über das oder durch das achte Schaltelement 86 und über das oder durch das neunte Schaltelement 88 mit dem ersten Leistungsausgang 46 verbindbar oder verbunden.

Das erste Schaltelement 120 ist mit einer ersten Eingangswelle 124 der ersten Übersetzungseinheit 56 und das zweite Schaltelement 122 mit einer zweiten Eingangswelle 126 der ersten Übersetzungseinheit 56 verbunden. Die erste und zweite Eingangswelle 124, 126 sind als Hohlwellen ausgebildet. Ausserdem sind die erste und zweite Eingangswelle 124, 126 zueinander koaxial angeordnet. Im Weiteren sind die erste und zweite Eingangswelle 124, 126 ineinander, insbesondere frei drehbar ineinander, angeordnet. Die zweite Eingangswelle 126 ist also in der ersten Eingangswelle 124 angeordnet, insbesondere frei drehbar angeordnet. Die zweite Eingangswelle 126 kann in der ersten Eingangswelle 124 gelagert sein. Der Antrieb 52, insbesondere die Antriebswelle 50, ist als Vollwelle ausgebildet. Ausserdem ist der Antrieb 52, insbesondere die Antriebswelle 50, koaxial zur ersten und zweiten Eingangswelle 124, 126 angeordnet. Darüber hinaus ist der Antrieb 52, insbesondere die Antriebswelle 50, frei drehbar in der ersten und zweite Eingangswelle 124, 126, insbesondere der zweiten Eingangswelle 126, angeordnet und/oder gelagert. Der Antrieb 52, insbesondere die Antriebswelle 50, kann in der zweiten Eingangswelle 126 gelagert sein.

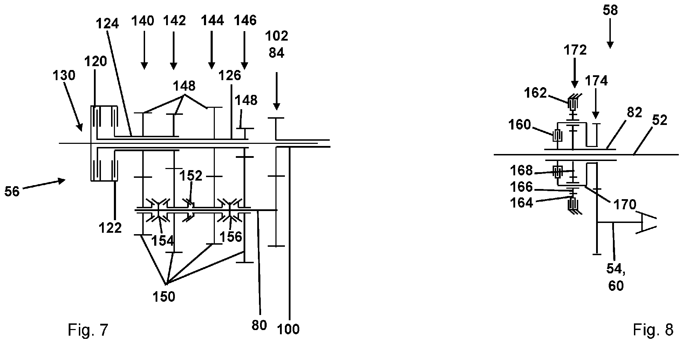

Die erste und/oder zweite Eingangswelle 124, 126 können über eine Mehrzahl von Radsätzen 128, insbesondere genau vier Radsätze 128, der ersten Übersetzungseinheit 56 und einem oder mehreren Koppelelementen 152, 154, 156, insbesondere einem ersten und/oder einem zweiten und/oder einem dritte Koppelelement 152, 154, 156, mit der ersten Ausgangswelle 80 der ersten Übersetzungseinheit 56 verbindbar sein. Eine detaillierte schematische Darstellung und Beschreibung der ersten Übersetzungseinheit 56 findet sich bei Fig. 7. Die zweite Übersetzungseinheit 58 kann eine erste Stirnradstufe und/oder eine zweite Stirnradstufe und/oder ein erstes Planetengetriebe und ein drittes und viertes Schaltelement umfassen. Die zweite Übersetzungseinheit 58 ist mit dem Abtrieb 54 verbindbar oder verbunden. Eine detaillierte schematische Darstellung und Beschreibung der zweiten Übersetzungseinheit 58 findet sich bei den Figuren 8, 11 und 12.

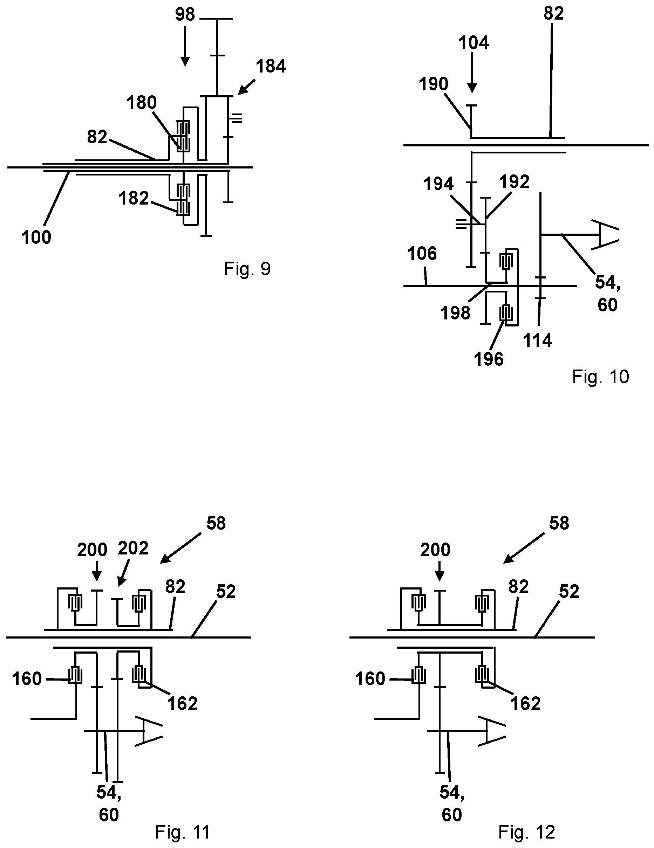

Die Antriebsvorrichtung 20, insbesondere die zweite Übersetzungseinheit 58, umfasst die dritte Eingangswelle 82. Ausserdem umfasst die Antriebsvorrichtung 20, insbesondere eine dritte Übersetzungseinheit 98, die vierte Eingangswelle 100. Die erste Ausgangswelle 80 ist mit der vierten Eingangswelle 100 durch oder über die erste Übersetzungsstufe 84 bzw. dritte Übersetzungsstufe 102 verbunden. Die erste bzw. dritte Übersetzungsstufe 84, 102 ist vorliegend als vierte oder sechste Stirnradstufe ausgebildet. Die erste Übersetzungseinheit 56 ist mit der zweiten Übersetzungseinheit 58 über oder durch die dritte Übersetzungseinheit 98 verbunden. Im Speziellen ist die dritte Übersetzungseinheit 98 mit der ersten Übersetzungseinheit 56 über die erste Ausgangswelle 80 und die vierte Eingangswelle 100 verbindbar oder verbunden. Ausserdem ist die dritte Übersetzungseinheit mit der zweiten Übersetzungseinheit über die dritte Eingangswelle 82 verbindbar oder verbunden. Eine detaillierte schematische Darstellung und Beschreibung der dritten Übersetzungseinheit 98 findet sich bei Fig. 9. Die erste und zweite und dritte Übersetzungseinheit 56, 58, 98 weisen ausserdem mehrere Durchgänge 96, insbesondere zentrale Durchgänge, für den Antrieb 52, insbesondere die Antriebswelle 50, auf.

Die dritte und vierte Eingangswelle 82, 100 sind als Hohlwellen ausgebildet. Ausserdem sind die dritte und vierte Eingangswelle 82, 100 zueinander koaxial angeordnet. Im Weiteren sind die dritte und vierte Eingangswelle 124, 126 ineinander, insbesondere frei drehbar ineinander, angeordnet. Die vierte Eingangswelle 100 ist in der dritten Eingangswelle 82 angeordnet, insbesondere frei drehbar angeordnet. Die vierte Eingangswelle 100 kann in der ersten Eingangswelle 82 gelagert sein. Der Antrieb 52, insbesondere die Antriebswelle 50, ist koaxial zur dritten und vierten Eingangswelle 82, 100 angeordnet. Darüber hinaus ist der Antrieb 52, insbesondere die Antriebswelle 50, frei drehbar in der dritten und vierten Eingangswelle 82, 100, insbesondere der vierten Eingangswelle 100, angeordnet und/oder gelagert. Der Antrieb 52, insbesondere die Antriebswelle 50, kann in der vierten Eingangswelle 100 gelagert sein. Der Abtrieb 54, insbesondere die Abtriebswelle 60, ist als Vollwelle ausgebildet. Ausserdem kann der Abtrieb 54, insbesondere die Abtriebswelle 60, parallel zur ersten und zweiten und dritten und vierten Eingangswelle 124, 126, 82, 100 und der ersten Ausgangswelle 80 und dem Antrieb 52, insbesondere der Antriebswelle 50, angeordnet sein.

Mit der vierten Ausführungsform gemäss Figur 5 können mit der ersten, zweiten und dritten Übersetzungseinheit 56, 58, 98 jeweils zwölf Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 1). Im Speziellen können zwölf Vorwärts- und zwölf Rückwärtsgänge der Antriebsvorrichtung 20 oder Arbeitsmaschine 10 realisiert werden.

**Tabelle 1 - Modi der vierten Ausführungsform.**

| **Vorwärts Modus** | **Rückwärts Modus** | **120** | **122** | **154-links** | **154-rechts** | **152** | **156-links** | **156-rechts** | **160** | **162** | **180** | **182** |
|---|---|---|---|---|---|---|---|---|---|---|---|---|
| 1 | | | X | | | X | | X | | X | X | |
| 2 | | X | | | | | | X | | X | X | |
| 3 | | | X | | X | | | | | X | X | |
| 4 | | X | | | | | X | | | X | X | |
| 5 | | | X | X | | | | | | X | X | |
| 6 | | X | | X | | X | | | | X | X | |
| 7 | | | X | | | X | | X | X | | X | |
| 8 | | X | | | | | | X | X | | X | |
| 9 | | | X | | X | | | | X | | X | |
| 10 | | X | | | | | X | | X | | X | |
| 11 | | | X | X | | | | | X | | X | |
| 12 | | X | | X | | X | | | X | | X | |
| | 1 | | X | | | X | | X | | X | | X |
| | 2 | X | | | | | | X | | X | | X |
| | 3 | | X | | X | | | | | X | | X |
| | 4 | X | | | | | X | | | X | | X |
| | 5 | | X | X | | | | | | X | | X |
| | 6 | X | | X | | X | | | | X | | X |
| | 7 | | X | | | X | | X | X | | | X |
| | 8 | X | | | | | | X | X | | | X |
| | 9 | | X | | X | | | | X | | | X |
| | 10 | X | | | | | X | | X | | | X |
| | 11 | | X | X | | | | | X | | | X |
| | 12 | X | | X | | X | | | X | | | X |

Die Modi können durch Öffnen und Schliessen der zu den genannten Bezugszeichen zugehörigen Schaltelemente und/oder Koppelelemente wie in Tabelle 1 dargestellt realisiert werden. Im Speziellen können die Modi durch Öffnen und Schliessen des ersten Schaltelements 120 und/oder und/oder des zweiten Schaltelements 122 und/oder dritten Schaltelements 160 und/oder vierten Schaltelements 162 und/oder fünften Schaltelements 180 und/oder sechsten Schaltelements 182 und/oder des ersten und/oder zweiten und/oder dritten Koppelelements 152, 154, 156, wie in Tabelle 1, dargestellt realisiert werden.

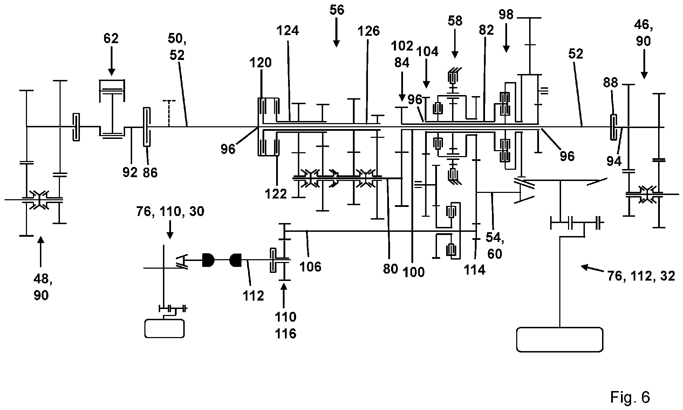

Figur 6 zeigt eine schematische Darstellung des fünften Ausführungsbeispiels der erfindungsgemässen Antriebsvorrichtung 20. Die in Figur 6 gezeigte Antriebsvorrichtung 20 entspricht im Wesentlichen der in den Figuren 1 bis 5 gezeigten Antriebsvorrichtung 20, sodass im Folgenden lediglich auf Details und/oder Unterschiede eingegangen wird. Die in Figur 1 dargestellte Arbeitsmaschine 10 kann die in Figur 6 dargestellte Antriebsvorrichtung 20 umfassen.

Die Antriebsvorrichtung umfasst die vierte Übersetzungseinheit 104. Die vierte Übersetzungseinheit 104 ist mit der ersten und zweiten Übersetzungseinheit 56, 58 über die dritte Übersetzungseinheit, insbesondere die dritte Eingangswelle 82 verbindbar oder verbunden. Ausserdem ist die vierte Übersetzungseinheit 104 mit der Vorgelegewelle 106 verbindbar oder verbunden. Auch die vierte Übersetzungseinheit 104 weist mindestens einen Durchgang 96 oder mehrere Durchgänge 96 für den Antrieb 52, insbesondere die Antriebswelle 52, auf. Eine detaillierte schematische Darstellung und Beschreibung der vierten Übersetzungseinheit 104 findet sich bei Fig. 10.

Mit der fünften Ausführungsform gemäss Figur 6 können mit der ersten, zweiten, dritten und vierten Übersetzungseinheit 56, 58, 98, 104 jeweils achtzehn Modi pro Drehrichtung des Abtriebs 54 der Antriebsvorrichtung 20, oder mit anderen Worten, in Vorwärts- und Rückwärtsrichtung der Antriebsvorrichtung 20 oder Arbeitsmaschine 10 realisiert werden (siehe Tabelle 2). Im Speziellen können achtzehn Vorwärts- und achtzehn Rückwärtsgänge der Antriebsvorrichtung 20 oder Arbeitsmaschine 10 realisiert werden.

**Tabelle 2 - Modi der fünften Ausführungsform.**

| **Vorwärts Modus** | **Rückwärts Modus** | **120** | **122** | **154-links** | **154-rechts** | **152** | **156-links** | **156-rechts** | **160** | **162** | **196** | **180** | **182** |
|---|---|---|---|---|---|---|---|---|---|---|---|---|---|
| 1 | | | X | | | X | | X | | | X | X | |
| 2 | | X | | | | | | X | | | X | X | |
| 3 | | | X | | X | | | | | | X | X | |
| 4 | | X | | | | | X | | | | X | X | |
| 5 | | | X | X | | | | | | | X | X | |
| 6 | | X | | X | | X | | | | | X | X | |
| 7 | | | X | | | X | | X | | X | | X | |
| 8 | | X | | | | | | X | | X | | X | |
| 9 | | | X | | X | | | | | X | | X | |
| 10 | | X | | | | | X | | | X | | X | |
| 11 | | | X | X | | | | | | X | | X | |
| 12 | | X | | X | | X | | | | X | | X | |
| 13 | | | X | | | X | | X | X | | | X | |
| 14 | | X | | | | | | X | X | | | X | |
| 15 | | | X | | X | | | | X | | | X | |
| 16 | | X | | | | | X | | X | | | X | |
| 17 | | | X | X | | | | | X | | | X | |
| 18 | | X | | X | | X | | | X | | | X | |
| | 1 | | X | | | X | | X | | | X | | X |
| | 2 | X | | | | | | X | | | X | | X |
| | 3 | | X | | X | | | | | | X | | X |
| | 4 | X | | | | | X | | | | X | | X |
| | 5 | | X | X | | | | | | | X | | X |
| | 6 | X | | X | | X | | | | | X | | X |
| | 7 | | X | | | X | | X | | X | | | X |
| | 8 | X | | | | | | X | | X | | | X |
| | 9 | | X | | X | | | | | X | | | X |
| | 10 | X | | | | | X | | | X | | | X |
| | 11 | | X | X | | | | | | X | | | X |
| | 12 | X | | X | | X | | | | X | | | X |
| | 13 | | X | | | X | | X | X | | | | X |
| | 14 | X | | | | | | X | X | | | | X |
| | 15 | | X | | X | | | | X | | | | X |
| | 16 | X | | | | | X | | X | | | | X |
| | 17 | | X | X | | | | | X | | | | X |
| | 18 | X | | X | | X | | | X | | | | X |

Die Modi können durch Öffnen und Schliessen der zu den genannten Bezugszeichen zugehörigen Schaltelemente und/oder Koppelelemente wie in Tabelle 2 dargestellt realisiert werden. Im Speziellen können die Modi durch Öffnen und Schliessen des ersten Schaltelements 120 und/oder und/oder des zweiten Schaltelements 122 und/oder dritten Schaltelements 160 und/oder vierten Schaltelements 162 und/oder fünften Schaltelements 180 und/oder sechsten Schaltelements 182 und/oder siebten Schaltelements 196 und/oder des ersten und/oder zweiten und/oder dritten Koppelelements 152, 154, 156, wie in Tabelle 2, dargestellt realisiert werden.

Figur 7 zeigt eine detaillierte schematische Darstellung eines Ausführungsbeispiels der ersten Übersetzungseinheit 56 der erfindungsgemässen Antriebsvorrichtung 20. Die in Figur 7 gezeigte ersten Übersetzungseinheit 56 entspricht im Wesentlichen der in den Figuren 1 bis 6 gezeigten ersten Übersetzungseinheit 56, sodass im Folgenden lediglich auf Details und/oder Unterschiede eingegangen wird. Die in den Figuren 1 bis 6 dargestellte Arbeitsmaschine 10 oder Antriebsvorrichtung 20 kann die in Figur 7 dargestellte ersten Übersetzungseinheit 56 umfassen.

Das erste und zweite Schaltelement 120, 122 sind als erste und zweite Kupplung ausgebildet. Die Eingangsseite 130, insbesondere eine gemeinsame Eingangsseite, des ersten und zweiten Schaltelements 120, 122 ist über den Motor 62 und den Antrieb 52 antreibbar. Über die Eingangsseite 130 kann eine Kraft und/oder ein Drehmoment und/oder eine Drehzahl in die erste Übersetzungseinheit 56 einleitbar oder an diese übertragbar sein.

Die Antriebsvorrichtung 20, insbesondere die erste Übersetzungseinheit 56, weist vier Radsätze 128 auf, einen ersten und einen zweiten und einen dritten und einen vierten Radsatz 140, 142, 144, 146. Der erste und zweite Radsatz 140, 142 umfassen jeweils ein Festrad 148 an oder auf der ersten Eingangswelle 124 und jeweils ein Schaltrad 150 an oder auf der ersten Ausgangswelle 80. Ausserdem weisen der dritte und vierte Radsatz jeweils ein Festrad 148 an oder auf der zweiten Eingangswelle 126 und jeweils ein Schaltrad 150 an der ersten Ausgangswelle 80 auf. Die Schalträder 150 können auf der ersten Ausgangswelle 80 drehbar gelagert Zahnräder oder Gangzahnräder sein. Die Festräder 148, beispielsweise Zahnräder, sind drehfest mit der ersten und zweiten Eingangswelle 124, 126 verbunden. Die Festräder 148 stehen mit den Schalträder 150 in Eingriff.

Darüber hinaus umfasst die erste Übersetzungseinheit 56 ein erstes Koppelelement 152 zum Koppeln des Schaltrads 150 des zweiten Radsatzes 142 und des Schaltrads 150 des dritten Radsatzes 144. Das erste Koppelelement 152 ist an der ersten Ausgangswelle 80 zwischen dem zweiten und dritten Radsatz 142, 144 angeordnet, und insbesondere auf der ersten Ausgangswelle 80 drehbar gelagert. Das zweite Koppelelement 154 ist zwischen dem ersten und zweiten Radsatz 140, 142 auf oder an der ersten Ausgangswelle 80 angeordnet. Das Schaltrad 150 des ersten oder zweiten Radsatzes 140, 142 ist wahlweise mit dem oder durch das zweite Koppelelement 154 mit der ersten Ausgangswelle 80 verbindbar. Das dritte Koppelelement 156 ist zwischen dem dritten und vierten Radsatz 144, 146 auf oder an der ersten Ausgangswelle 80 angeordnet. Das Schaltrad 150 des dritten oder vierten Radsatzes 144, 146 ist wahlweise mit dem oder durch das dritte Koppelelement 156 mit der ersten Ausgangswelle 80 verbindbar. Die erste Übersetzungseinheit 56 kann also vorteilhafterweise vier Gangstufen aufweisen, die nur über einen Radsatz schaltbar sind und zwei Gangstufen, die als Windungsgangstufen schaltbar sind.

Figur 8 zeigt eine detaillierte schematische Darstellung eines Ausführungsbeispiels der zweiten Übersetzungseinheit 58 der erfindungsgemässen Antriebsvorrichtung 20. Die in Figur 8 gezeigte zweite Übersetzungseinheit 58 entspricht im Wesentlichen der in den Figuren 1 bis 6 gezeigten zweiten Übersetzungseinheit 58, sodass im Folgenden lediglich auf Details und/oder Unterschiede eingegangen wird. Die in den Figuren 1 bis 6 dargestellte Arbeitsmaschine 10 oder Antriebsvorrichtung 20 kann die in Figur 8 dargestellte zweite Übersetzungseinheit 58 umfassen.

Die zweite Übersetzungseinheit umfasst das erste Planetengetriebe 172 und die erste Stirnradstufe 174 und das dritte und vierte Schaltelement 160, 162. Das dritte Schaltelement 160 ist mit der dritten Eingangswelle 82 verbindbar oder verbunden. Ausserdem ist die dritte Eingangswelle 82 durch das dritte Schaltelement 160 mit dem ersten Planetenträger 170 des ersten Planetengetriebes 172 verbindbar. Die dritte Eingangswelle 82 ist mit der ersten Sonne 168 des ersten Planetengetriebes 172 verbunden. Das vierte Schaltelement 162, das als Bremse ausgebildet ist, ist mit dem ersten Hohlrad 164 des ersten Planetengetriebes 172 verbunden. Ausserdem ist der erste Planetenträger 170 des ersten Planetengetriebes 172 mit der ersten Stirnradstufe 174 verbunden. Die erste Stirnradstufe174 ist mit dem Abtrieb 54, insbesondere der Abtriebswelle 60, verbunden.

Figur 9 zeigt eine detaillierte schematische Darstellung eines Ausführungsbeispiels der dritten Übersetzungseinheit 98 der erfindungsgemässen Antriebsvorrichtung 20. Die in Figur 9 gezeigte dritte Übersetzungseinheit 98 entspricht im Wesentlichen der in den Figuren 1 bis 6 gezeigten dritten Übersetzungseinheit 98, sodass im Folgenden lediglich auf Details und/oder Unterschiede eingegangen wird. Die in den Figuren 1 bis 6 dargestellte Arbeitsmaschine 10 oder Antriebsvorrichtung 20 kann die in Figur 9 dargestellte dritte Übersetzungseinheit 98 umfassen.

Die dritte Übersetzungseinheit kann insbesondere eine Reversiereinheit oder Lastschaltwendeeinheit sein. Die dritte Übersetzungseinheit 98 kann zur Umkehr der Fahrtrichtung ausgebildet. Mit der dritten Übersetzungseinheit 98 kann also eine Drehrichtung der ersten Ausgangswelle 80 umkehrbar sein. Die dritte Übersetzungseinheit ist eingangsseitig über die oder durch die vierte Eingangswelle 100 mit der ersten Übersetzungseinheit 56 verbindbar oder verbunden. Die dritte Übersetzungseinheit 98 ist ausgangsseitig über die dritte oder durch die dritte Eingangswelle 82 mit der zweiten Übersetzungseinheit 58 verbindbar oder verbunden sein.

Die dritte Übersetzungseinheit 98 umfasst in diesem Ausführungsbeispiel eine zweite Übersetzungsstufe 184 und ein fünftes und sechstes Schaltelement 180, 182. Das fünfte Schaltelement 180 ist über die oder durch die vierte Eingangswelle 100 mit der ersten Ausgangswelle 80 verbindbar oder verbunden. Das sechste Schaltelement 182 ist über die oder durch die zweite Übersetzungsstufe 184 und die vierte Eingangswelle 100 mit der ersten Ausgangswelle 80 verbindbar oder verbunden. Das fünfte und/oder sechste Schaltelement 180, 182 ist mit der dritten Eingangswelle 82 verbindbar oder verbunden.

Die zweite Übersetzungsstufe 184 umfasst insbesondere vier Zahnräder mit mindestens einem freilaufenden Zahnrad. Dadurch kann die dritte Übersetzungseinheit 98 vorteilhafterweise als Vorvariatorstufe für zweite Übersetzungseinheit 58 ausgebildet sein. Alternativ kann die dritte Übersetzungseinheit 98 in Planetenbauweise ausgeführt sein. Darüber hinaus sind das fünfte und sechste Schaltelement 180, 182 achsparallel und/oder koaxial zur ersten und zweiten und dritten und vierten Eingangswelle angeordnet.

Figur 10 zeigt eine detaillierte schematische Darstellung eines Ausführungsbeispiels der vierten Übersetzungseinheit 104 der erfindungsgemässen Antriebsvorrichtung 20. Die in Figur 10 gezeigte vierte Übersetzungseinheit 104 entspricht im Wesentlichen der in den Figuren 1 bis 6 gezeigten vierten Übersetzungseinheit 104, sodass im Folgenden lediglich auf Details und/oder Unterschiede eingegangen wird. Die in den Figuren 1 bis 6 dargestellte Arbeitsmaschine 10 oder Antriebsvorrichtung 20 kann die in Figur 10 dargestellte vierte Übersetzungseinheit 104 umfassen.

Die vierte Übersetzungseinheit 104 ist eingangsseitig über die oder durch die dritte Eingangswelle 82 mit der zweiten und dritten Übersetzungseinheit 58, 98 verbindbar oder verbunden sein. Die vierte Übersetzungseinheit 104 ist ausgangsseitig mit der Vorgelegewelle 106 verbindbar oder verbunden. Die vierte Übersetzungseinheit 104 umfasst eine dritte Stirnradstufe 190 und eine vierte Stirnradstufe 192 und ein siebtes Schaltelement 196. Die dritte Stirnradstufe 190 ist mit der vierten Stirnradstufe 192 verbunden. Die dritte Stirnradstufe 190 ist mit der vierten Stirnradstufe 192 über eine Welle 194, die insbesondere freilaufend sein kann, verbunden. Die vierte Stirnradstufe 192 ist mit dem siebten Schaltelement 196 verbunden, insbesondere über eine weitere Welle 198. Die vierte Stirnradstufe 192 ist mit dem siebten oder durch das siebte Schaltelement 196 mit der Vorgelegewelle 106 verbindbar. Ausserdem ist die Vorgelegewelle 106 mit dem Abtrieb 54, insbesondere der Abtriebswelle 60, über das oder durch das Kopplungszahnrad 114 verbunden.

Figur 11 zeigt eine detaillierte schematische Darstellung eines weiteren Ausführungsbeispiels der zweiten Übersetzungseinheit 58 der erfindungsgemässen Antriebsvorrichtung 20. Die in Figur 11 gezeigte zweite Übersetzungseinheit 58 entspricht im Wesentlichen der in den Figuren 1 bis 6 gezeigten zweiten Übersetzungseinheit 58, sodass im Folgenden lediglich auf Details und/oder Unterschiede eingegangen wird. Die in den Figuren 1 bis 6 dargestellte Arbeitsmaschine 10 oder Antriebsvorrichtung 20 kann die in Figur 11 dargestellte zweite Übersetzungseinheit 58 umfassen.

In einer alternativen oder weiteren Ausführungsformen umfasst die zweite Übersetzungseinheit 58 die erste und zweite Stirnradstufe 200, 202 und das dritte und vierte Schaltelement 160, 162. Dabei sind das dritte Schaltelement 160 und das vierte Schaltelement 162 mit der dritten Eingangswelle 82 verbindbar oder verbunden. Die dritte Eingangswelle 82 ist durch das oder über das dritte Schaltelement 160 mit der ersten Stirnradstufe 200 verbindbar oder verbunden und durch das oder über das vierte Schaltelement 162 mit der zweiten Stirnradstufe 202 verbindbar oder verbunden. Das dritte Schaltelement 160 ist mit der ersten Stirnradstufe 200 und das vierte Schaltelement 162 mit der zweiten Stirnradstufe 202 verbindbar oder verbunden. Die erste und zweite Stirnradstufe 200, 202 sind mit dem Abtrieb 54, insbesondere der Abtriebswelle 60, verbunden.

Figur 12 zeigt eine detaillierte schematische Darstellung eines weiteren Ausführungsbeispiels der zweiten Übersetzungseinheit 58 der erfindungsgemässen Antriebsvorrichtung 20. Die in Figur 12 gezeigte zweite Übersetzungseinheit 58 entspricht im Wesentlichen der in den Figuren 1 bis 6 gezeigten zweiten Übersetzungseinheit 58, sodass im Folgenden lediglich auf Details und/oder Unterschiede eingegangen wird. Die in den Figuren 1 bis 6 dargestellte Arbeitsmaschine 10 oder Antriebsvorrichtung 20 kann die in Figur 12 dargestellte zweite Übersetzungseinheit 58 umfassen.

In einer alternativen oder weiteren Ausführungsformen kann die zweite Übersetzungseinheit 58 die erste Stirnradstufe 200 und das dritte und vierte Schaltelement 160, 162 umfassen. Dabei sind das dritte Schaltelement 160 und das vierte Schaltelement 162 mit der dritten Eingangswelle 82 verbindbar oder verbunden. Die dritte Eingangswelle 82 ist durch das oder über das dritte Schaltelement 160 mit der ersten Stirnradstufe 200 verbindbar oder verbunden und/oder durch das oder über das vierte Schaltelement 162 mit der ersten Stirnradstufe 200 verbindbar oder verbunden. Das dritte Schaltelement 160 ist mit der ersten Stirnradstufe 200 und/oder das vierte Schaltelement 162 mit der ersten Stirnradstufe 200 verbindbar oder verbunden. Die erste Stirnradstufe 200 ist mit dem Abtrieb 54, insbesondere der Abtriebswelle 60, verbunden.

Figur 13 zeigt eine schematische Darstellung eines ersten Ausführungsbeispiel einer erfindungsgemässen Getriebegehäuseanordnung 900. Die in Figur 13 gezeigte Getriebegehäuseanordnung 900 kann die in den Figuren 1 bis 12 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in den Figuren 1 dargestellte Arbeitsmaschine 10 kann die in Figur 13 dargestellte Getriebegehäuseanordnung 900 umfassen.

Das erste Gehäusemodul 902 weist eine ausgangsseitige Gehäusewand 950 auf. Die ausgangsseitige Gehäusewand 950 des ersten Gehäusemoduls 902 umfasst eine erste Ausgangsöffnung 952. Die erste Ausgangsöffnung 952 ist zum Anbinden und/oder Verbinden der ersten Ausgangswelle 80, mit der dritten Eingangswelle 82 und/oder der vierten Eingangswelle 100 ausgebildet. In der ersten Ausgangsöffnung 952 ist der Antrieb 52, insbesondere die Antriebswelle 50, und/oder die erste Ausgangswelle 80 oder die dritte Eingangswelle 82 und/oder die vierte Eingangswelle 100 angeordnet. Im Speziellen erstreckt sich der Antrieb 52, insbesondere die Antriebswelle 50, und/oder die erste Ausgangswelle 80 oder die dritte Eingangswelle 82 und/oder die vierte Eingangswelle 100 durch die erste Ausgangsöffnung 952.

Das vierte Gehäusemodul 908 weist eine eingangsseitige Gehäusewand 954 aufweisen. Die eingangsseitige Gehäusewand 954 des vierten Gehäusemoduls 908 umfasst eine sechste Eingangsöffnung 956. Die sechste Eingangsöffnung 956 ist zur Durchführung des Antriebs 52, insbesondere der Antriebswelle 50, und/oder der dritten Eingangswelle 82 und/oder der vierten Eingangswelle 100 ausgebildet. In der sechsten Eingangsöffnung 956 ist der Antrieb 52, insbesondere die Antriebswelle 50, und die dritte Eingangswelle 82 und/oder die vierte Eingangswelle 100 angeordnet. Im Speziellen erstrecken sich der Antrieb 52, insbesondere die Antriebswelle 50, und die dritte Eingangswelle 82 und/oder die vierte Eingangswelle 100 durch die sechste Eingangsöffnung 956.

Das vierte Gehäusemodul 908 umfasst eine ausgangsseitige Gehäusewand 954. Die ausgangsseitige Gehäusewand 954 des vierten Gehäusemoduls 908 weist eine fünfte Ausgangsöffnung 956 auf. Die fünfte Ausgangsöffnung 956 ist zur Durchführung des Antriebs 52, insbesondere der Antriebswelle 50, und/oder der dritten Eingangswelle 82 und/oder der vierten Eingangswelle 100 ausgebildet. In der fünften Ausgangsöffnung 956 ist der Antrieb 52, insbesondere die Antriebswelle 50, und die dritte Eingangswelle 82 und/oder die vierte Eingangswelle 100 angeordnet. Im Speziellen erstrecken sich der Antrieb 52, insbesondere die Antriebswelle 50, und die dritte Eingangswelle 82 und/oder die vierte Eingangswelle 100 durch die fünfte Ausgangsöffnung 956.

Die ausgangsseitige Gehäusewand 954 des vierten Gehäusemoduls 908 weist eine sechste Ausgangsöffnung 958 auf. Die sechste Ausgangsöffnung 958 ist kann zur Durchführung und/oder zum Anbinden und/oder Verbinden der Vorgelegewelle 106 ausgebildet. In der sechsten Ausgangsöffnung 958 ist die Vorgelegewelle 106 angeordnet. Im Speziellen erstreckt sich die Vorgelegewelle 106 durch die sechste Ausgangsöffnung 958.

Das zweite Gehäusemodul 904 weist eine eingangsseitige Gehäusewand 960 auf. Die eingangsseitige Gehäusewand 960 des zweiten Gehäusemoduls 904 umfasst eine dritte Eingangsöffnung 962. Die dritte Eingangsöffnung 962 ist zum Anbinden und/oder Verbinden des Antriebs 52, insbesondere der Antriebswelle 50, und/oder der dritten Eingangswelle 82 und/oder der vierten Eingangswelle 100 ausgebildet. In der dritten Eingangsöffnung 962 ist der Antrieb 52, insbesondere der Antriebswelle 50, und die dritte Eingangswelle 82 und die vierte Eingangswelle 100 angeordnet. Im Speziellen erstrecken sich der Antrieb 52, insbesondere der Antriebswelle 50, und die dritte Eingangswelle 82 und die vierte Eingangswelle 100 durch die dritte Eingangsöffnung 962.

Die eingangsseitige Gehäusewand 960 des zweiten Gehäusemoduls 904 weist eine vierte Eingangsöffnung 964 auf. Die vierte Eingangsöffnung 964 ist zur Durchführung und/oder zum Anbinden und/oder Verbinden der Vorgelegewelle 106 ausgebildet. In der vierten Eingangsöffnung 962 der eingangsseitigen Gehäusewand 960 ist die Vorgelegewelle 106 angeordnet. Im Speziellen erstreckt sich die Vorgelegewelle 106 durch die vierte Eingangsöffnung 964.

Das zweite Gehäusemodul 904 weist eine ausgangsseitige Gehäusewand 966 auf. Die ausgangsseitige Gehäusewand 966 des zweiten Gehäusemoduls 904 umfasst eine dritte Ausgangsöffnung 968. Die dritte Ausgangsöffnung 968 ist zum Anbinden und/oder Verbinden des Antriebs 52, insbesondere der Antriebswelle 50, und/oder der dritten Eingangswelle 82 und/oder der vierten Eingangswelle 100 ausgebildet. In der dritten Ausgangsöffnung 968 ist der Antrieb 52, insbesondere der Antriebswelle 50, und die dritte Eingangswelle 82 und die vierte Eingangswelle 100 angeordnet. Im Speziellen erstrecken sich der Antrieb 52, insbesondere der Antriebswelle 50, und die dritte Eingangswelle 82 und die vierte Eingangswelle 100 durch die dritte Ausgangsöffnung 968.

Die ausgangsseitige Gehäusewand 966 des zweiten Gehäusemoduls 904 weist die vierte Ausgangsöffnung 926 auf. Die vierte Ausgangsöffnung 926 ist zur Durchführung und/oder zum Anbinden und/oder Verbinden des Abtriebs 54, insbesondere der Abtriebswelle 60, ausgebildet. In der vierten Ausgangsöffnung 926 der ausgangsseitige Gehäusewand 966 ist der Abtrieb 54, insbesondere die Abtriebswelle 60, angeordnet. Im Speziellen erstreckt sich der Abtrieb 54, insbesondere die Abtriebswelle 60, durch die vierte Ausgangsöffnung 926.

Das dritte Gehäusemodul 906 weist eine eingangsseitige Gehäusewand 970 auf. Die eingangsseitige Gehäusewand 970 des dritten Gehäusemoduls 906 umfasst eine fünfte Eingangsöffnung 972. Die fünfte Eingangsöffnung 972 ist zum Anbinden und/oder Verbinden des Antriebs 52, insbesondere der Antriebswelle 50, und/oder der dritten Eingangswelle 82 und/oder der vierten Eingangswelle 100 ausgebildet. In der fünften Eingangsöffnung 972 ist der Antrieb 52, insbesondere der Antriebswelle 50, und die dritte Eingangswelle 82 und die vierte Eingangswelle 100 angeordnet. Im Speziellen erstrecken sich der Antrieb 52, insbesondere der Antriebswelle 50, und die dritte Eingangswelle 82 und die vierte Eingangswelle 100 durch die fünfte Eingangsöffnung 972. Die ausgangsseitige Gehäusewand 974 des dritten Gehäusemoduls 906 weist die siebte Ausgangsöffnung 976 auf. Die siebte Ausgangsöffnung 976 ist zur Durchführung und/oder zum Anbinden und/oder Verbinden des Antriebs 52, insbesondere der Antriebswelle 50, ausgebildet. In der siebten Ausgangsöffnung 976 ist der Antrieb 52, insbesondere die Antriebswelle 50, angeordnet. Im Speziellen erstreckt sich der Antrieb 52, insbesondere die Antriebswelle 50, durch die siebte Ausgangsöffnung 976. Vorteilhafterweise kann die Gehäuseanordnung dadurch auf einfache Art und Weise anbindbar sein und/oder modular aufgebaut sein.

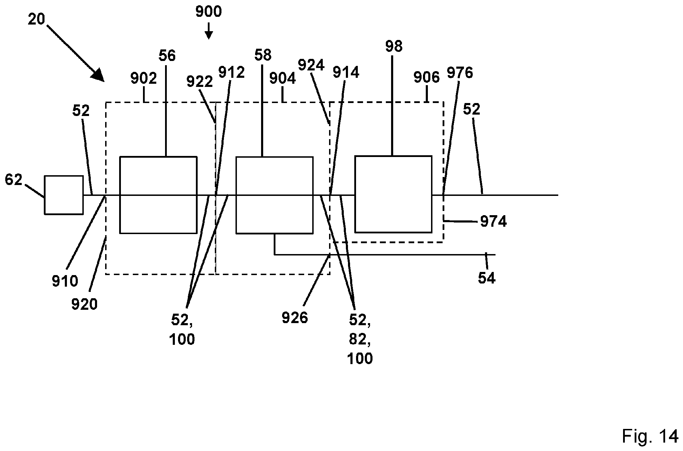

Figur 14 zeigt eine schematische Darstellung eines zweiten Ausführungsbeispiel einer erfindungsgemässen Getriebegehäuseanordnung 900. Die in Figur 14 gezeigte Getriebegehäuseanordnung 900 kann die in den Figuren 1 bis 12 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in Figur 14 gezeigte Getriebegehäuseanordnung 900 entspricht im Wesentlichen der in Figur 13 gezeigten Getriebegehäuseanordnung 900, sodass im Folgenden lediglich auf Details und/oder Unterschiede eingegangen wird. Die in den Figuren 1 dargestellte Arbeitsmaschine 10 kann die in Figur 14 dargestellte Getriebegehäuseanordnung 900 umfassen.

Die Getriebegehäuseanordnung 900 umfasst ein erstes Gehäusemodul 902 mit der ersten Übersetzungseinheit 56. Im Speziellen ist die erste Übersetzungseinheit 56 im ersten Gehäusemodul 902 angeordnet. Die Getriebegehäuseanordnung 900 umfasst ein zweites Gehäusemodul 904 mit der zweiten Übersetzungseinheit 58. Im Speziellen ist die zweite Übersetzungseinheit 58 im zweiten Gehäusemodul 904 angeordnet. Die Getriebegehäuseanordnung 900 umfasst ein drittes Gehäusemodul 906 mit der dritten Übersetzungseinheit 98. Im Speziellen ist die dritte Übersetzungseinheit 98 im dritten Gehäusemodul 906 angeordnet.

Das erste und zweite und dritte Gehäusemodul 902, 904, 906 sind entlang oder in Richtung des Antriebs 52, insbesondere der Antriebswelle 50, angeordnet. Im ersten Gehäusemodul 902 können zusätzlich die Vorgelegewelle 106 und/oder die erste Übersetzungsstufe 84 angeordnet sein. Im zweiten Gehäusemodul 904 können zusätzlich die Vorgelegewelle 106 und/oder der Abtrieb 54, insbesondere die Abtriebswelle 60, und/oder die dritte und/oder vierte Eingangswelle angeordnet sein. Im dritten Gehäusemodul 904 können zusätzlich die Vorgelegewelle 106 und/oder der Abtrieb 54, insbesondere die Abtriebswelle 60, und/oder die dritte und/oder vierte Eingangswelle angeordnet sein.

Das erste Gehäusemodul 902 weist eine eingangsseitige Gehäusewand 920 auf. Die eingangsseitige Gehäusewand 920 des ersten Gehäusemoduls 902 weist eine erste Eingangsöffnung 910 auf. In der ersten Eingangsöffnung 910 der eingangsseitigen Gehäusewand 920 des ersten Gehäusemoduls 902 ist der Antrieb 52, insbesondere die Antriebswelle 50, angeordnet. Im Speziellen erstreckt sich der Antrieb 52, insbesondere die Antriebswelle 54, durch die erste Eingangsöffnung 910.

Die ausgangsseitige Gehäusewand 950 des ersten Gehäusemoduls 902 und die eingangsseitige Gehäusewand 960 des zweiten Gehäusemoduls 904 sind als erste gemeinsame Gehäusewand 922 des ersten und zweiten Gehäusemoduls 902, 904 ausgebildet. Die erste gemeinsame Gehäusewand 922 weist eine erste Durchgangsöffnung 912 auf. Die erste gemeinsame Gehäusewand 922 kann eine zweite Durchgangsöffnung (nicht gezeigt) aufweisen. In der ersten Durchgangsöffnung 912 ist der Antrieb 52, insbesondere die Antriebswelle 50, und/oder die erste Ausgangswelle 80 oder die dritte Eingangswelle 82 und/oder die vierte Eingangswelle 100 angeordnet. Im Speziellen erstrecken sich der Antrieb 52, insbesondere die Antriebswelle 50, und/oder die erste Ausgangswelle 80 oder die dritte Eingangswelle 82 und/oder die vierte Eingangswelle 100 durch die erste Durchgangsöffnung 912. In der zweiten Durchgangsöffnung kann die Vorgelegewelle 106 angeordnet sein. Im Speziellen kann sich die Vorgelegewelle 106 durch die zweite Durchgangsöffnung erstrecken.

Die ausgangsseitige Gehäusewand 966 des zweiten Gehäusemoduls 902 und die eingangsseitige Gehäusewand des dritten Gehäusemoduls 906 sind als zweite gemeinsame Gehäusewand 924 des zweiten und dritten Gehäusemoduls 904, 906 ausgebildet. Die zweite gemeinsame Gehäusewand 924 weist eine dritte Durchgangsöffnung 914 auf. Die zweite gemeinsame Gehäusewand 924 weist eine dritte Durchgangsöffnung 914 auf. In der dritten Durchgangsöffnung 914 sind die dritte Eingangswelle 82 und/oder die vierte Eingangswelle 100 angeordnet. Im Speziellen erstrecken sich die dritte Eingangswelle 82 und/oder die vierte Eingangswelle 100 durch die dritte Durchgangsöffnung 914. Die zweite gemeinsame Gehäusewand 924 weist eine vierte Ausgangsöffnung 926 auf. Die vierte Ausgangsöffnung 926 kann zur Durchführung und/oder zum Anbinden und/oder Verbinden des Abtriebs 54, insbesondere der Abtriebswelle 60, ausgebildet sein. In der vierten Ausgangsöffnung 926 der ist der Abtrieb 54, insbesondere die Abtriebswelle 60, angeordnet. Im Speziellen erstreckt sich der Abtrieb 54, insbesondere die Abtriebswelle 60, durch die vierte Ausgangsöffnung 926.

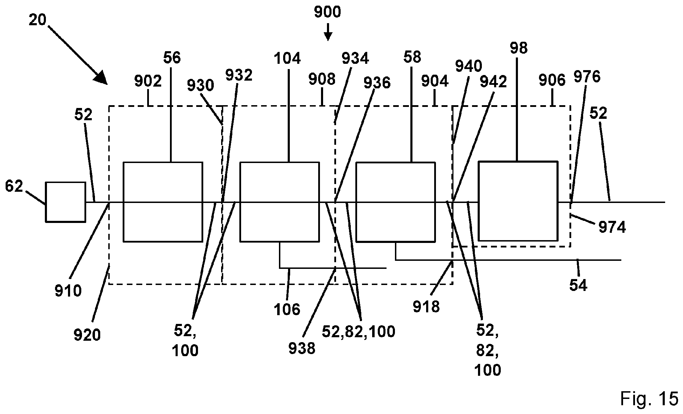

Figur 15 zeigt eine schematische Darstellung eines dritten Ausführungsbeispiel einer erfindungsgemässen Getriebegehäuseanordnung 900. Die in Figur 15 gezeigte Getriebegehäuseanordnung 900 kann die in den Figuren 1 bis 12 gezeigte Antriebsvorrichtung 20 oder Komponenten der erfindungsgemässen Antriebsvorrichtung 20 umfassen, sodass im Folgenden lediglich auf Details und/oder Unterschiede eingegangen wird. Die in Figur 15 gezeigte Getriebegehäuseanordnung 900 entspricht im Wesentlichen der in den Figuren 13 oder 14 gezeigten Getriebegehäuseanordnung 900, sodass im Folgenden lediglich auf Details und/oder Unterschiede eingegangen wird. Die in den Figuren 1 dargestellte Arbeitsmaschine 10 kann die in Figur 15 dargestellte Getriebegehäuseanordnung 900 umfassen.

Die Getriebegehäuseanordnung 900 umfasst ein viertes Gehäusemodul 908 mit der vierten Übersetzungseinheit 104. Im Speziellen ist die vierte Übersetzungseinheit 104 im vierten Gehäusemodul 908 angeordnet. Das erste und zweite und dritte und vierte Gehäusemodul 902, 904, 906, 908 sind entlang oder in Richtung des Antriebs 52, insbesondere der Antriebswelle 50, angeordnet. Die Gehäusemodule sind in der Reihenfolge erstes und viertes und zweites und drittes Gehäusemodul 900, 908, 904, 906 nacheinander und direkt benachbart angeordnet. Im vierten Gehäusemodul 908 können zusätzlich die Vorgelegewelle 106 und/oder die dritte und/oder vierte Eingangswelle 82, 100 angeordnet sein. Die ausgangsseitige Gehäusewand 950 des ersten Gehäusemoduls 902 und die eingangsseitige Gehäusewand des vierten Gehäusemoduls 908 sind als erste gemeinsame Gehäusewand 930 des ersten und vierten Gehäusemoduls 902, 908 ausgebildet. Die erste gemeinsame Gehäusewand 930 kann eine erste Durchgangsöffnung 932 aufweisen. Die erste gemeinsame Gehäusewand 930 kann eine zweite Durchgangsöffnung (nicht gezeigt) aufweisen. In der ersten Durchgangsöffnung 932 sind der Antrieb 52, insbesondere die Antriebswelle 50, und/oder die erste Ausgangswelle 80 oder die dritte Eingangswelle 82 und/oder die vierte Eingangswelle 100 angeordnet sein. Im Speziellen erstrecken sich der Antrieb 52, insbesondere die Antriebswelle 50, und/oder die erste Ausgangswelle 80 oder die dritte Eingangswelle 82 und/oder die vierte Eingangswelle 100 durch die erste Durchgangsöffnung 932. In der zweiten Durchgangsöffnung kann die Vorgelegewelle 106 angeordnet sein. Im Speziellen kann sich die Vorgelegewelle 106 durch die zweite Durchgangsöffnung erstrecken. Die ausgangsseitige Gehäusewand 954 des vierten Gehäusemoduls 908 und die eingangsseitige Gehäusewand des zweiten Gehäusemoduls 904 sind alternativ als zweite gemeinsame Gehäusewand 934 des zweiten und vierten Gehäusemoduls 904, 908 ausgebildet. Die zweite gemeinsame Gehäusewand 934 weist eine dritte Durchgangsöffnung 936 auf. Die zweite gemeinsame Gehäusewand 934 weist eine vierte Durchgangsöffnung 938 auf. In der dritten Durchgangsöffnung 936 ist der Antrieb 52, insbesondere die Antriebswelle 50, und/oder die dritte Eingangswelle 82 und/oder die vierte Eingangswelle 100 angeordnet. Im Speziellen erstrecken sich der Antrieb 52, insbesondere die Antriebswelle 50, und/oder die dritte Eingangswelle 82 und/oder die vierte Eingangswelle 100 durch die dritte Durchgangsöffnung 936. In der vierten Durchgangsöffnung 938 ist die Vorgelegewelle 106 angeordnet sein. Im Speziellen kann sich die Vorgelegewelle 106 durch die vierte Durchgangsöffnung 938 erstrecken. Die ausgangsseitige Gehäusewand 966 des zweiten Gehäusemoduls 904 und die eingangsseitige Gehäusewand 970 des dritten Gehäusemoduls 906 sind alternativ als dritte gemeinsame Gehäusewand 940 des zweiten und dritten Gehäusemoduls 904, 906 ausgebildet. Die dritte gemeinsame Gehäusewand 940 weist eine fünfte Durchgangsöffnung 942 auf. In der fünften Durchgangsöffnung 942 kann der Antrieb 52, insbesondere die Antriebswelle 50, und/oder die dritte Eingangswelle 82 und/oder die vierte Eingangswelle 100 angeordnet sein. Im Speziellen können sich der Antrieb 52, insbesondere die Antriebswelle 50, und/oder die dritte Eingangswelle 82 und/oder die vierte Eingangswelle 100 durch die fünfte Durchgangsöffnung 942 erstrecken. Die dritte gemeinsame Gehäusewand 940 kann eine sechste Durchgangsöffnung oder, wie vorliegend, die vierte Ausgangsöffnung 926 aufweisen. Die vierte Ausgangsöffnung 926 ist zur Durchführung und/oder zum Anbinden und/oder Verbinden des Abtriebs 54, insbesondere der Abtriebswelle 60, ausgebildet sein. In der vierten Ausgangsöffnung ist der Abtrieb 54, insbesondere die Abtriebswelle 60, angeordnet. Im Speziellen erstreckt sich der Abtrieb 54, insbesondere die Abtriebswelle 60, durch die vierte Ausgangsöffnung 926.

Figur 16 zeigt eine detaillierte schematische Darstellung eines weiteren Ausführungsbeispiels der erfindungsgemässen Arbeitsmaschine 10 mit einer erfindungsgemässen Getriebegehäuseanordnung 900. Die in Figur 16 gezeigte Getriebegehäuseanordnung 900 kann die in den Figuren 1 bis 12 gezeigte Antriebsvorrichtung 20 oder Komponenten der Antriebsvorrichtung 20 umfassen. Die in Figur 16 gezeigte Getriebegehäuseanordnung 900 entspricht im Wesentlichen der in den Figuren 13 bis 15 gezeigten Getriebegehäuseanordnung 900, sodass im Folgenden lediglich auf Details und/oder Unterschiede eingegangen wird. Die in Figur 1 dargestellte Arbeitsmaschine 10 kann die in Figur 16 dargestellten Getriebegehäuseanordnung 900 umfassen.

Figur 16 zeigt schematisch zwei Rahmenelemente 980, insbesondere ein erstes und zweites Rahmenelement 982, 984, der Arbeitsmaschine 10. Die Getriebegehäuseanordnung 900, insbesondere das erste und zweite und dritte und vierte Gehäusemodul 902, 904, 906, 908, sind an, insbesondere zwischen, den zwei Rahmenelementen 980, insbesondere dem ersten und zweiten Rahmenelement 982, 980, angeordnet. Die Rahmenelemente 980, 982, 984 können an, insbesondere zwischen oder unmittelbar benachbart zu, dem ersten und zweiten Differenzialgetriebe 30, 32 angeordnet sein. Der Motor 62 kann an, insbesondere auf oder zwischen den zwei Rahmenelementen 980, insbesondere dem ersten und zweiten Rahmenelement 982, 984, angeordnet sein. Die Getriebegehäuseanordnung 900, insbesondere das erste und zweite und dritte und vierte Gehäusemodul 902, 904, 906, 908, sind entlang einer Längsachse 986 der Arbeitsmaschine 10 angeordnet. Der Antrieb 52, insbesondere die Antriebswelle 50, und die Längsachse 986 der Arbeitsmaschine 10 können identisch oder parallel sein.

## Patentansprüche

1. Antriebsvorrichtung für eine Arbeitsmaschine (10) oder eine Getriebegehäuseanordnung (900), umfassend:
einen Antrieb (52),
einen Abtrieb (54),
eine erste Übersetzungseinheit (56) mit einem ersten Schaltelement (120) und einem zweiten Schaltelement (122), wobei die Eingangsseite (130) des ersten und/oder zweiten Schaltelements (120, 122) mit dem Antrieb (52) verbunden ist,
und das erste Schaltelement (120) mit einer ersten Eingangswelle (124) der ersten Übersetzungseinheit (56) und das zweite Schaltelement (122) mit einer zweiten Eingangswelle (126) der ersten Übersetzungseinheit (56) verbindbar ist,
und die erste und/oder zweite Eingangswelle (124, 126) über eine Mehrzahl von Radsätzen (128, 140, 142, 144, 146) der ersten Übersetzungseinheit (56) mit einer ersten Ausgangswelle (80) der ersten Übersetzungseinheit (56) verbindbar sind,
wobei mit der ersten Übersetzungseinheit (56) wenigstens eine Windungsgangstufe ausbildbar ist,
und die Antriebsvorrichtung (20) eine zweite Übersetzungseinheit (58) umfasst, wobei die zweite Übersetzungseinheit (58) eine erste Stirnradstufe (174, 200) und/oder eine zweite Stirnradstufe (202) und/oder ein erstes Planetengetriebe (172) und ein drittes und viertes Schaltelement (160, 162) umfasst,
**dadurch gekennzeichnet, dass**
die erste Übersetzungseinheit (56) mit der zweiten Übersetzungseinheit (58) verbindbar ist und die zweite Übersetzungseinheit (58) mit dem Abtrieb (54) verbindbar ist.

2. Antriebsvorrichtung nach Anspruch 1, **dadurch gekennzeichnet, dass** die Antriebsvorrichtung (20), insbesondere die zweite Übersetzungseinheit (58), eine dritte Eingangswelle (82) umfasst.

3. Antriebsvorrichtung nach Anspruch 1 oder 2, **dadurch gekennzeichnet, dass** die Antriebsvorrichtung (20) eine dritte Übersetzungseinheit (98) umfasst, und die dritte Übersetzungseinheit (98) mit der ersten Übersetzungseinheit (56) verbindbar oder verbunden ist, und/oder die dritte Übersetzungseinheit (98) mit der zweiten Übersetzungseinheit (58) verbindbar oder verbunden ist.

4. Antriebsvorrichtung nach Anspruch 3, **dadurch gekennzeichnet, dass** die Antriebsvorrichtung (20), insbesondere die dritte Übersetzungseinheit (98), eine vierte Eingangswelle (100) umfasst.

5. Antriebsvorrichtung nach mindestens einem der vorangehenden Ansprüche, **dadurch gekennzeichnet, dass** die Antriebsvorrichtung (20) eine vierte Übersetzungseinheit (104) umfasst, und/oder die vierte Übersetzungseinheit (104) mit der ersten Übersetzungseinheit (56) verbindbar ist, und/oder die vierte Übersetzungseinheit (104) mit einer Vorgelegewelle (106) verbindbar ist.

6. Antriebsvorrichtung nach mindestens einem der vorangehenden Ansprüche, **dadurch gekennzeichnet, dass** die Antriebsvorrichtung (20) einen Motor (62) umfasst, und/oder der Motor (62) mit dem Antrieb (52) verbindbar ist.

7. Antriebsvorrichtung nach mindestens einem der vorangehenden Ansprüche, **dadurch gekennzeichnet, dass** die erste und/oder zweite und/oder dritte und/oder vierte Übersetzungseinheit (56, 58, 98, 104) einen Durchgang (96) für den Antrieb (52) aufweisen.

8. Antriebsvorrichtung nach mindestens einem der vorangehenden Ansprüche, **dadurch gekennzeichnet, dass** der Motor (62) mit einem ersten Leistungsausgang (46) verbindbar oder verbunden ist.

9. Antriebsvorrichtung nach mindestens einem der vorangehenden Ansprüche, **dadurch gekennzeichnet, dass** die erste und/oder zweite und/oder dritte und/oder vierte Eingangswelle (124, 126, 82, 100) als Hohlwellen ausgebildet sind, und/oder die erste Ausgangswelle (80) und/oder der Antrieb (52) und/oder der Abtrieb (54) als Vollwellen ausgebildet sind, und/oder die erste und/oder zweite und/oder dritte und/oder vierte Eingangswelle (124, 126, 82, 100) und/oder die erste Ausgangswelle (80) und/oder der Antrieb (52) und/oder der Abtrieb (54) koaxial und/oder parallel zueinander angeordnet sind.

10. Antriebsvorrichtung nach mindestens einem der vorangehenden Ansprüche, **dadurch gekennzeichnet, dass** die Antriebsvorrichtung (20) eine Steuereinheit (42) umfasst.

11. Getriebegehäuseanordnung mit einer Antriebsvorrichtung nach einem der Ansprüche 1 bis 10, **dadurch gekennzeichnet, dass** die Getriebegehäuseanordnung (900) ein erstes Gehäusemodul (902) mit der ersten Übersetzungseinheit (56) und ein zweites Gehäusemodul (904) mit der zweiten Übersetzungseinheit (58) umfasst, und das erste und zweite Gehäusemodul (902, 904) entlang des Antriebs (52) angeordnet sind.

12. Getriebegehäuseanordnung nach Anspruch 11, **dadurch gekennzeichnet, dass** die Getriebegehäuseanordnung (900) ein drittes Gehäusemodul (906) mit der dritten Übersetzungseinheit (98) umfasst, und das erste und zweite und dritte Gehäusemodul (902, 904, 906) entlang des Antriebs (52) angeordnet sind.

13. Getriebegehäuseanordnung nach Anspruch 11 oder 12, **dadurch gekennzeichnet, dass** die Getriebegehäuseanordnung (900) ein viertes Gehäusemodul (908) mit der vierten Übersetzungseinheit (104) umfasst, und das erste und zweite und dritte und vierte Gehäusemodul (902, 904, 906, 908) entlang des Antriebs (52) angeordnet sind.

14. Arbeitsmaschine mit einer Antriebsvorrichtung (20) nach Anspruch 1 bis 10 oder mit einer Getriebegehäuseanordnung (900) nach Anspruch 11 bis 13.

15. Arbeitsmaschine nach Anspruch 14, **dadurch gekennzeichnet, dass** die Arbeitsmaschine (10) zwei Rahmenelemente (980, 982, 984) umfasst, wobei die Antriebsvorrichtung (20), insbesondere die Getriebegehäuseanordnung (900), zumindest teilweise an den Rahmenelementen (980, 982, 984) angeordnet ist.
